(19) **Europäisches Patentamt / European Patent Office / Office européen des brevets**

(11) **EP 3 430 787 B1**

(12) **EUROPEAN PATENT SPECIFICATION**

(45) Date of publication and mention
of the grant of the patent:
**05.08.2020  Bulletin 2020/32**

(51) Int Cl.:
***H04L 29/06*** *(2006.01)*    ***H04L 12/24*** *(2006.01)*

(21) Application number: **17715569.4**

(22) Date of filing: **17.03.2017**

(86) International application number:
**PCT/US2017/023059**

(87) International publication number:
**WO 2017/161329 (21.09.2017 Gazette 2017/38)**

(54) **SERVICE PROVISIONING VIA HTTP-LEVEL SURROGATE MANAGEMENT**

DIENSTBEREITSTELLUNG DURCH HTTP-LEVEL ERSATZVERWALTUNG

FOURNITURE DE SERVICE AVEC GESTUIN DE SUBSTITUTION AU NIVEAU HTTP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.03.2016  US 201662309610 P
02.06.2016  US 201662344801 P
23.01.2017  US 201762449487 P**

(43) Date of publication of application:
**23.01.2019  Bulletin 2019/04**

(73) Proprietor: **IDAC Holdings, Inc.
Wilmington, DE 19809 (US)**

(72) Inventors:
• **DU, Hongfei
Woking
Surrey GU2FT (GB)**
• **TROSSEN, Dirk
London EC2A 3QR (GB)**
• **KRISHNA, Renan
London EC2A 3QR (GB)**
• **ROBITZSCH, Sebastian
London EC2A 3QR (GB)**

(74) Representative: **AWA Sweden AB
Stortorget 17
252 20 Helsingborg (SE)**

(56) References cited:
**US-A1- 2014 192 717**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 430 787 B1

**Description**

**BACKGROUND**

Information-centric networking (ICN) is a paradigm in which content is exchanged by means of information addressing, while connecting appropriate networked entities that are suitable to act as a source of information towards the networked entity that requested the content.

In traditional internet protocol (IP) networks, IP-only web servers are placed in ICN-based content distribution networks (CDNs) with pre-determined caching network elements.

**SUMMARY**

Content owners, origin servers, and other entities may wish to use elastic service provisioning to provide users improved service. For example, an origin server may wish to offload processing/network load to a surrogate server such that users of a service may experience improved performance. As another example, a content owner may wish to have content distributed to a number of surrogate servers to lower latency and improve bandwidth. As will be further described herein, system architectures, components, interfaces, and procedures may be provided for performing elastic service provisioning.

Document US-2014192717 discloses an Information Centric Network in which service applications can be deployed.

**BRIEF DESCRIPTION OF THE DRAWINGS**

A more detailed understanding may be had from the following description, given by way of example in conjunction with the accompanying drawings wherein:

FIG. 1A is a system diagram of an example communications system in which one or more disclosed embodiments may be implemented;

FIG. 1B is a system diagram of an example wireless transmit/receive unit (WTRU) that may be used within the communications system illustrated in FIG. 1A;

FIG. 1C is a system diagram of an example radio access network and an example core network that may be used within the communications system illustrated in FIG. 1A;

FIG. 1D is a system diagram of another example radio access network and an example core network that may be used within the communications system illustrated in FIG. 1A;

FIG. 1E is a system diagram of another example radio access network and an example core network that may be used within the communications system illustrated in FIG. 1A;

FIG. 2 is a system diagram illustrating an overview of an example ICN-based network;

FIG. 3 is a tree diagram which illustrates an example surrogate management namespace for information exchange;

FIG. 4 is a state transition diagram illustrating an example state transition for surrogate management;

FIG. 5 is a block diagram which illustrates an example architecture for surrogate management;

FIG. 6 is a block diagram which illustrates example components and interfaces that may be used for surrogate management;

FIG. 7 is a message sequence diagram which illustrates an example sequence for surrogate registration;

FIG. 8 is a message sequence diagram which illustrates an example message sequence for surrogate deregistration;

FIG. 9 is a message sequence diagram which illustrates an example message sequence for surrogate deregistration;

FIG. 10 is a block example operational procedures that may be used for surrogate placement;

FIG. 11 is a message sequence diagram which illustrates an example sequence for surrogate placement;

FIG. 12 is a message sequence diagram which illustrates an example sequence for surrogate activation;

FIG. 13 is a flow chart which illustrates an example flow for surrogate replacement/refreshment;

FIG. 14 is a message sequence diagram which illustrates an example procedure relating to a surrogate update;

FIG. 15 is a message sequence diagram which illustrates an example sequence for surrogate resilience control;

FIG. 16 is a flow chart which illustrates an example method for surrogate selection;

FIG. 17 is a system diagram which illustrates an example of resource relocation in a surrogate system;

FIG. 18 is a table comparing access traffic demand versus server resource price;

FIG. 19 is a message sequence diagram which illustrates an example sequence describing a price-demand based algorithm via a representative pub/sub semantic; and

FIG. 20 is a system diagram which illustrates an example use case for a surrogate platform.

FIG. 21 is a system diagram which illustrates an example surrogate system architecture;

FIG. 22 is a system diagram illustrating an example system configured for SM-based surrogate server selection;

FIG. 23 is a system diagram illustrating example surrogate placement and activation for improving optimality;

FIG. 24 is a block diagram illustrating example interfaces relating to optimal content placement for surrogate management;

FIG. 25 is a tree diagram illustrating an example new namespace for TM-SM communication;

FIG. 26 is a message sequence chart illustrating example messaging for surrogate selection; and

FIGS. 27A and 27B are a message sequence chart illustrating example messaging for surrogate placement.

## DETAILED DESCRIPTION OF THE PREFERRED EMBODIMENTS

A detailed description of illustrative embodiments will now be described with reference to the various figures. Although this description provides a detailed example of possible implementations, it should be noted that the details are intended to be exemplary and in no way limit the scope of the application.

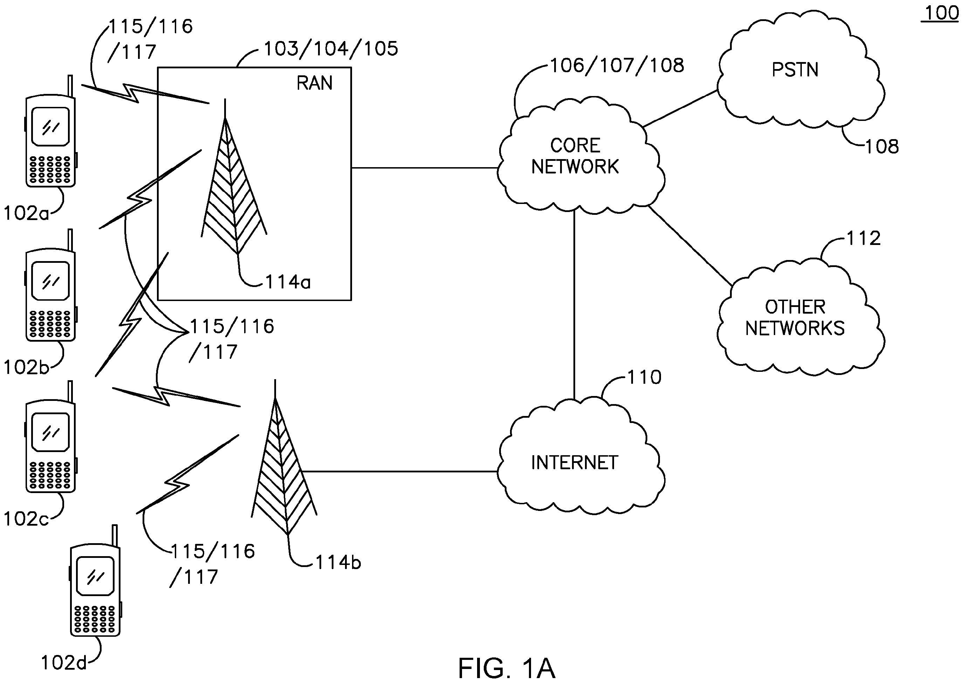

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the other networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple-output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

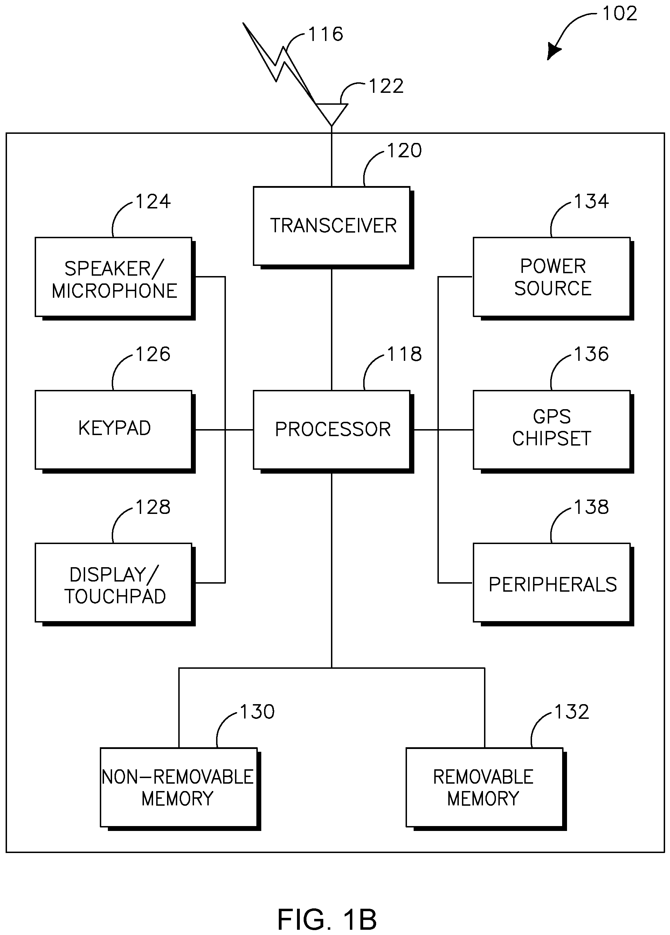

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

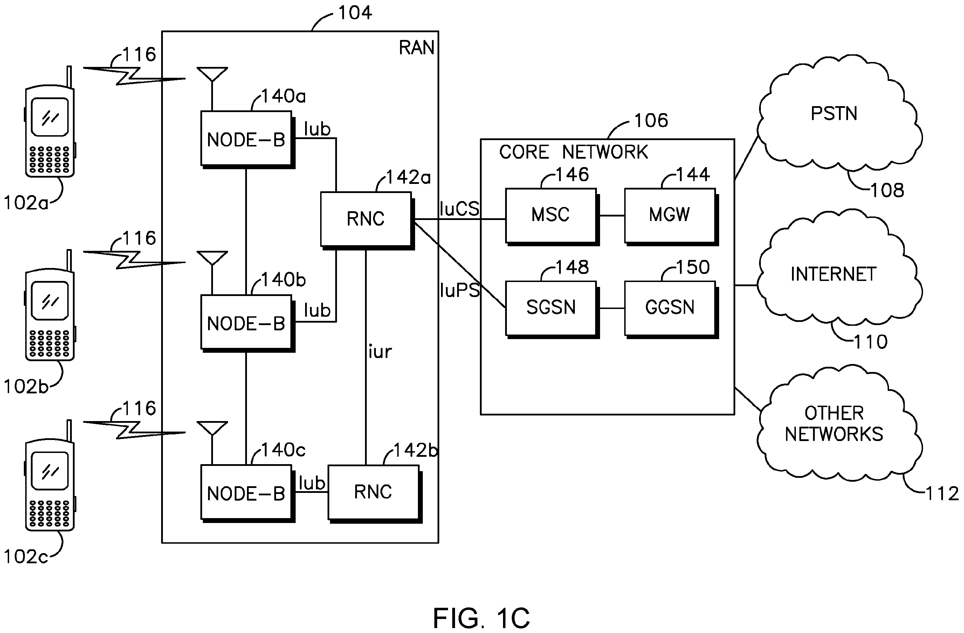

FIG. 1C is a system diagram of the RAN 103 and the core network 106 according to an embodiment. As noted above, the RAN 103 may employ a UTRA radio technology to communicate with the WTRUs 102a, 102b, 102c over the air interface 115. The RAN 103 may also be in communication with the core network 106. As shown in FIG. 1C, the RAN 103 may include Node-Bs 140a, 140b, 140c, which may each include one or more transceivers for communicating with the WTRUs 102a, 102b, 102c over the air interface 115. The Node-Bs 140a, 140b, 140c may each be associated with a particular cell (not shown) within the RAN 103. The RAN 103 may also include RNCs 142a, 142b. It will be appreciated that the RAN 103 may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC 142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and/or the like.

The core network 106 shown in FIG. 1C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

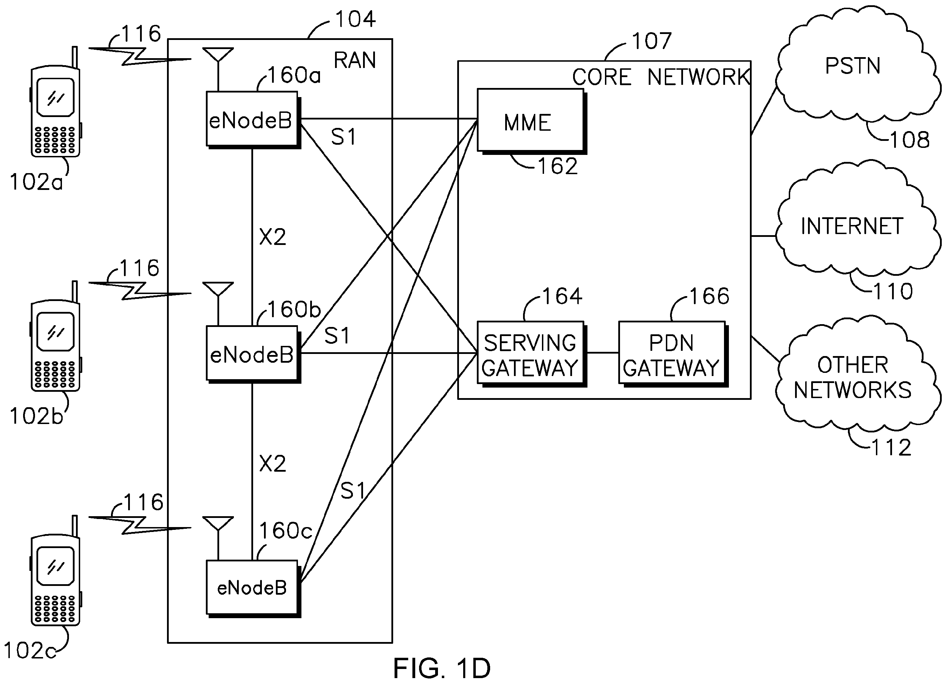

FIG. 1D is a system diagram of the RAN 104 and the core network 107 according to an embodiment. As noted above, the RAN 104 may employ an E-UTRA radio technology to communicate with the WTRUs 102a, 102b, 102c over the air interface 116. The RAN 104 may also be in communication with the core network 107.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, 160c may be associated with a particular cell (not shown) and may be configured to handle radio resource management decisions, handover decisions, scheduling of users in the uplink and/or downlink, and/or the like. As shown in FIG. 1D, the eNode-Bs 160a, 160b, 160c may communicate with one another over an X2 interface.

The core network 107 shown in FIG. 1D may include a mobility management gateway (MME) 162, a serving gateway 164, and a packet data network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and/or the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, 160c in the RAN 104 via the S1 interface. The serving gateway 164 may generally route and forward user data packets to/from the WTRUs 102a, 102b, 102c. The serving gateway 164 may also perform other functions, such as anchoring user planes during inter-eNode B handovers, triggering paging when downlink data is available for the WTRUs 102a, 102b, 102c, managing and storing contexts of th e WTRUs 102a, 102b, 102c, and/or the like.

The serving gateway 164 may also be connected to the PDN gateway 166, which may provide the WTRUs 102a, 102b, 102c with access to packet-switched networks, such as the Internet 110, to facilitate communications between the WTRUs 102a, 102b, 102c and IP-enabled devices.

The core network 107 may facilitate communications with other networks. For example, the core network 107 may provide the WTRUs 102a, 102b , 102c with access to circuit-switched networks, such as the PSTN 108, to facilitate communications between the WTRUs 102a, 102b, 102c and land-line communications devices. For example, the core network 107 may include, or may communicate with, an IP gateway (e.g., an IP multimedia subsystem (IMS) server) that serves as an interface between the core network 107 and the PSTN 108. In addition, the core network 107 may provide the WTRUs 102a, 102b, 102c with access to the networks 112, which may include other wired or wireless networks that are owned and/or operated by other service providers.

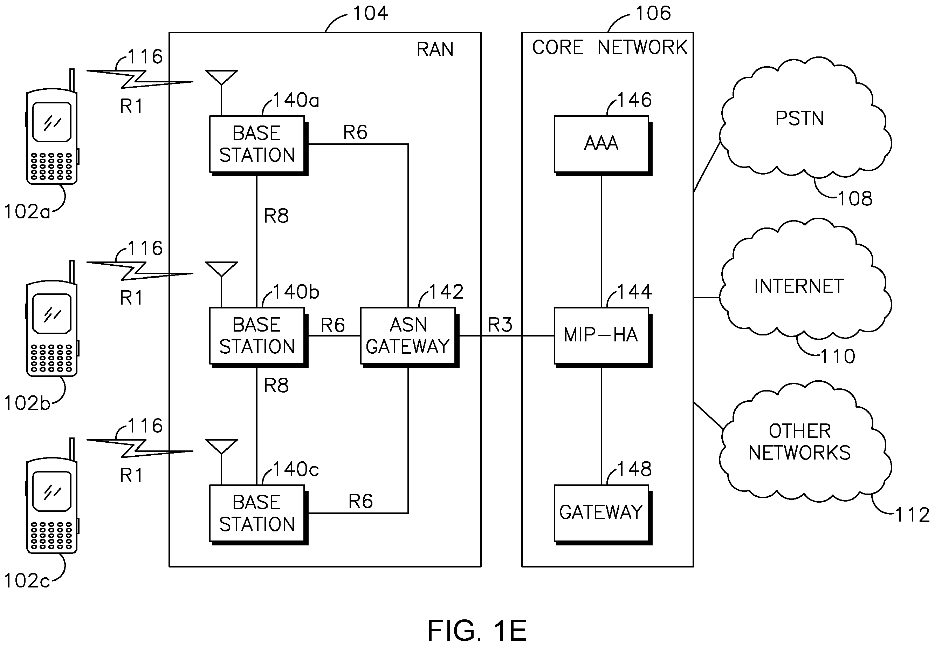

FIG. 1E is a system diagram of the RAN 105 and the core network 109 according to an embodiment. The RAN 105 may be an access service network (ASN) that employs IEEE 802.16 radio technology to communicate with the WTRUs 102a, 102b, 102c over the air interface 117. As will be further discussed below, the communication links between the different functional entities of the WTRUs 102a, 102b, 102c, the RAN 105, and the core network 109 may be defined as reference points.

As shown in FIG. IE, the RAN 105 may include base stations 180a, 180b, 180c, and an ASN gateway 182, though it will be appreciated that the RAN 105 may include any number of base stations and ASN gateways while remaining consistent with an embodiment. The base stations 180a, 180b, 180c may each be associated with a particular cell (not shown) in the RAN 105 and may each include one or more transceivers for communicating with the WTRUs 102a, 102b, 102c over the air interface 117. In one embodiment, the base stations 180a, 180b, 180c may implement MIMO technology. Thus, the base station 180a, for example, may use multiple antennas to transmit wireless signals to, and receive wireless signals from, the WTRU 102a. The base stations 180a, 180b, 180c may also provide mobility management functions, such as handoff triggering, tunnel establishment, radio resource management, traffic classification, quality of service (QoS) policy enforcement, and/or the like. The ASN gateway 182 may serve as a traffic aggregation point and may be responsible for paging, caching of subscriber profiles, routing to the core network 109, and/or the like.

The air interface 117 between the WTRUs 102a, 102b, 102c and the RAN 105 may be defined as an R1 reference point that implements the IEEE 802.16 specification. In addition, each of the WTRUs 102a, 102b, 102c may establish a logical interface (not shown) with the core network 109. The logical interface between the WTRUs 102a, 102b, 102c and the core network 109 may be defined as an R2 reference point, which may be used for authentication, authorization, IP host configuration management, and/or mobility management.

The communication link between each of the base stations 180a, 180b, 180c may be defined as an R8 reference point that includes protocols for facilitating WTRU handovers and the transfer of data between base stations. The communication link between the base stations 180a, 180b, 180c and the ASN gateway 182 may be defined as an R6 reference point. The R6 reference point may include protocols for facilitating mobility management based on mobility events associated with each of the WTRUs 102a, 102b, 102c.

As shown in FIG. IE, the RAN 105 may be connected to the core network 109. The communication link between the RAN 105 and the core network 109 may be defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 184 may provide the WTRUs 102a, 102b, 102c with access to packet-switched networks, such as the Internet 110, to facilitate communications between the WTRUs 102a, 102b, 102c and IP-enabled devices. The AAA server 186 may be responsible for user authentication and for supporting user services. The gateway 188 may facilitate interworking with other networks. For example, the gateway 188 may provide the WTRUs 102a, 102b, 102c with access to circuit-switched networks, such as the PSTN 108, to facilitate communications between the WTRUs 102a, 102b, 102c and land-line communications devices. In addition, the gateway 188 may provide the WTRUs 102a, 102b, 102c with access to the networks 112, which may include other wired or wireless networks that are owned and/or operated by other service providers.

Although not shown in FIG. IE, it will be appreciated that the RAN 105 may be connected to other ASNs and the core network 109 may be connected to other core networks. The communication link between the RAN 105 the other ASNs may be defined as an R4 reference point, which may include protocols for coordinating the mobility of the WTRUs 102a, 102b, 102c between the RAN 105 and the other ASNs. The communication link between the core network 109 and the other core networks may be defined as an R5 reference, which may include protocols for facilitating interworking between home core networks and visited core networks.

Information-centric networking (ICN) describes a new paradigm where content is exchanged through information addressing. In ICN, one or more networked entities that are suitable to act as a source of information are connected to a networked entity that requests content.

Some ICN architectures require the partial replacement of current network infrastructure in order to realize the desired network-level functions. In order to allow IP-only endpoints to natively communicate with each other over the an ICN architecture, several protocol abstractions (e.g., Internet Protocol (IP), hypertext transfer protocol (HTTP), Internet Group Management Protocol (IGMP)) have been defined to leverage a publish-subscribe model to achieve performance gains (e.g., using a dedicated handler; e.g., for HTTP or IGMP) and/or to allow IP-only endpoints to communicate with each other.

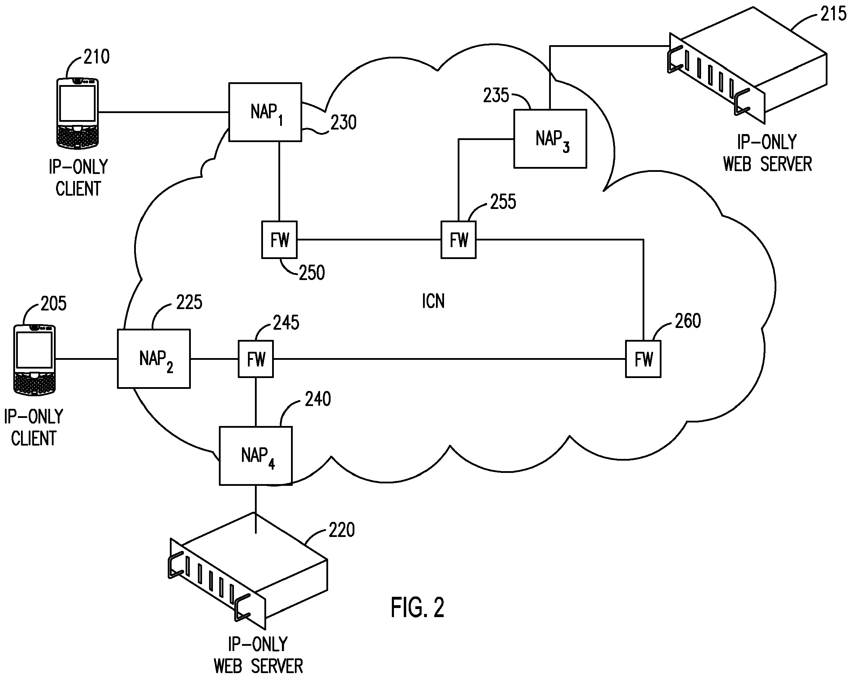

FIG. 2 is a system diagram illustrating an overview of an example ICN-based network. In FIG. 2, IP-only endpoints 205, 210, 215, 220 (WTRUs and servers) are shown connected to Network Attachment Points (NAPs) 225, 230, 235, 240 which act as translation points between the ICN and IP architectures. Forwarders (FW) 245, 250, 255, 260 are core network elements which interconnect NAPs and forward traffic based on a matching rule, (e.g. a Bloom filter). In FIG. 2, ICN core functions, including rendezvous (RV) (which matches publishers and subscribers) and topology management (which calculates a path between nodes and calculates the respective forwarding identifier) functions, are omitted for clarity. Using an ICN-based networking fabric and dedicated namespaces to map particular IP services to ICN (e.g. HTTP) may provide gains in significant network benchmarks such as co-incidental multicast. Furthermore, an ICN infrastructure which routes information based on certain information items (e.g., the fully qualified domain name (FQDN) and the URL in the case of HTTP-over-ICN) can allow the network to determine which subscriber to choose based on traffic engineering decisions which are completely transparent to the IP endpoints. For example, in the case of FIG. 2, assuming both server-side NAPs (sNAPs), i.e. $NAP_3$ 235 and $NAP_4$ 240, have subscribed to the same FQDN, a traffic engineering decision based on shortest path would let $NAP_1$ 230 be served by $NAP_3$ 235 and would let $NAP_2$ 225 be served by $NAP_4$ 240.

In traditional IP networks however, IP-only web servers are placed in CDNs with several pre-determined caching network elements in the backbone of an operator. Assuming the ICN fabric and the NAPs have been placed at, (or near) the edge of the network, a dynamic instantiation of authoritative IP-only webservers (e.g., surrogate servers) and their NAPs may require a framework which implements methods to mirror and/or replicate the entire computational instance in order to offer an FQDN-based IP service.

Various examples discussed herein relate to procedures for instructing a surrogacy framework to instantiate or re-instantiate a surrogate server based on statistics about the network and its traffic, for provisioning the desired network statistics through the surrogacy framework, for managing and maintaining surrogate servers (e.g., authoritative copies of the primary FQDN-based IP service endpoint) via a dedicated ICN namespace, for determining whether a container-based or a hypervisor-based virtualization technique is more appropriate to service a request to spin up a virtual machine to run a surrogate server, and for informing the NAP of the instantiation/de-instantiation of an FQDN-based IP service endpoint, among other things.

Various examples discussed herein also relate to architectures, components, interfaces, and procedures for performing elastic service provisioning via hypertext transfer protocol (HTTP)-level surrogate server management in an Information Centric Network (ICN). An HTTP surrogate may be a service endpoint at the HTTP level. The service endpoint may act on behalf of and/or with authority of an origin server. A surrogate can be a gateway, which can be co-located with an origin server. A surrogate can be a gateway that may be located at different points in the network. A surrogate server may delegate the authority to operate on behalf of one or more origin servers. A surrogate may work in close co-operation with one or more origin servers. A surrogate server may be referred to as a reverse proxy, origin server accelerator, and/or server accelerator. A surrogate server may be deployed close to one or more origin servers, close to a locality in a network, throughout the network, or the like. For example, surrogates may be deployed throughout the network in a configuration that may be similar to a configuration of a content delivery network (CDN).

By placing surrogate servers at distributed network locations, a surrogate server may provide a service that may be accessed over a short path that may have high accessible bandwidth. This may be done, for example, to allow the service to be accessed without the need to contact the service at its origin servers. Such a local and/or direct content access may offer a number of benefits.

Surrogate servers may act on behalf of the origin server. Surrogate servers may act on behalf of a content owner. Surrogate servers may offer a content owner greater control over their behavior than other types of proxies, e.g., edge caches or traditional CDNs. Surrogate servers may improve performance. Surrogate servers may offload the processing/network load from the origin server. Surrogate servers may offer transparent user experiences.

Surrogate servers may function similarly to mirror servers. For example, a copy of a whole site may be stored on a surrogate server. Surrogate servers may offer improvements over mirror servers. For example, instead of being redirected to a different FQDN/URL to access a mirror server, a user may be able to access a surrogate server using a same FQDN/URL. Surrogate servers may be different from standard HTTP intermediaries. Surrogate servers may give origin server(s) and content owner(s) the ability for finer control. For example, the surrogate server, origin server and content owner may maintain an implied relationship.

Various examples herein relate to a surrogate server management architecture. The surrogate server management architecture may include enabling components, functions, and/or interfaces between said components/functions. A surrogate server management architecture may be used for the distribution of a HTTP-based service endpoint, for example, by using a surrogate server (SS). Communication between a surrogate manager (SM) and a surrogate agent (SA) may be provided, for example, based on multiple criteria. The communications between the SM and SA may provide the placing, activating, and/or managing of surrogates. Examples of caching, response processing models, message sequence charts for the SM and SA are discussed herein.

The surrogate management architecture may allow elastic service provisioning by intelligently placing, activating, and managing surrogate servers, for example, based on the dynamic statistics reported from the network and the servers.

One or more of the following may be associated with the surrogate management architecture. Namespaces in an ICN network may be used for controlling and managing SSs. The operational states of SSs may be used during surrogate management. Management commands may be published by SM to the ICN network, received by SA, and/or received by SSs for switching their operational states. A set of key server/network statistics for a SS may be used, for example, to allow a surrogate to advertise, update, and/or remove their respective capabilities and constraints in ICN network. A surrogate finite-state machine (SFSM) may be used to describe the states and/or state transitions in the surrogate management framework. Component and interfaces for the baseline surrogate communication architecture may be developed. Mechanisms may be used to implement how the surrogate manager sends management commands to SA based on network and/or server dynamics. The management commands may include one or more of the following: place, displace, connect, disconnect, shutdown, and the like. Mechanisms may be used to implement how the SM registers/deregisters a surrogate server via the ICN network. Mechanisms may be used to implement how the SM places a surrogate server via the ICN network. Mechanisms may be used to implement how the SM activates a surrogate server via the ICN network. A resilience operation flow may be used if a SS is down and/or shifting to the next candidate SS. Mechanisms may be used for managing the SSs that may override mechanisms in the HTTP, such as replacement and/or validation. Mechanisms may be used to implement how the SM learns the statistics profiles of one or more surrogates from the ICN network. Mechanisms may be used to implement how the SM learns network link/node statistics from the ICN network. Mechanisms may be used to implement how the SM derives selected surrogates for content placement, for example, based on new FQDN requests with its requirement, and the information obtained.

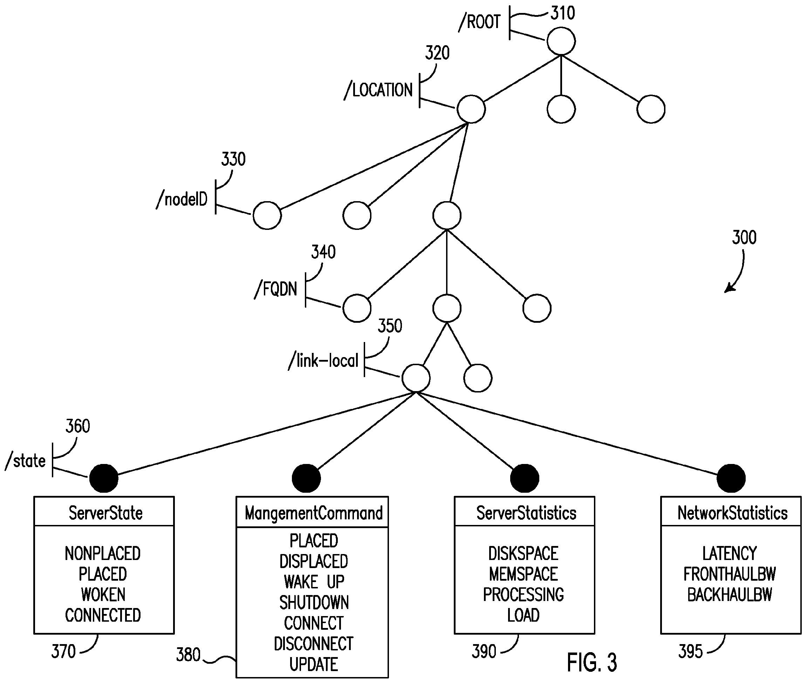

FIG. 3 is a tree diagram which illustrates an example surrogate management namespace 300 for information exchange. Namespaces in an ICN network may be used for controlling and managing SSs. FIG. 3 illustrates an example namespace 300, including example state information in different category lists that may be used for surrogate management. The example in FIG. 3 shows example hierarchical scopes based on which information is exchanged in the system. The information may be exchanged utilizing the same pub/sub delivery system that is used to realize the HTTP and IP message exchange for which the surrogate servers are connected to the network.

Hierarchical scopes may include one or more of the following. In the example of FIG. 3, the /root scope (/root) 310 may be a dedicated /root namespace for surrogate management. The /root namespace 310 may be embedded as a sub-structure under certain well-known namespaces. The /location scope (/location) 320 may be managed and established by a Topology Manager (TM). A TM includes an ICN entity that can manage the network topology of an ICN network, calculate the best path between endpoints, and/or communicate with a Rendezvous (RV) for publication/subscription (pub/sub) matching. /location 320 may group servers that are considered as co-located within a predefined geographical area. For example, /location 320 may group some or all servers located within a diameter of 10km from a location point. /location 320 may group some or all servers located within a city/town with same /location scope in the /location 320 namespace. The /nodeID namespace (/nodeID) 330 may be assigned under the /location 320 namespace (e.g., each of the location 320 namespaces). The /nodeID may be attached and/or assigned to the eNAPs. An eNAP may include an extended NAP (eNAP) for hosting a NAP and its attached surrogate servers. The /nodeID scopes may be managed and/or established by the TM. The /FQDN namespace (/FQDN) 340 of a locally attached surrogate may be published by the eNAP. The /FQDN 340 may be under the /nodeID 330 (e.g., each /nodeID 330). The information may be populated during a registration phase. For example, when the surrogate sends a DNS registration to the network and/or due to some offline registration procedure, the information may be populated during a registration phase. A configuration file at the eNAP may be used. The eNAP may be invoked when the surrogate becomes locally available. In another example, when the eNAP is instructed by the SM, the information may be populated during the registration phase. The eNAP may publish the /link-local address (/link-local) 350. The /link-local 350 may be assigned to the FQDN instance. For example, the /link-local 350 may be assigned for cases that more than one instance is instantiated locally. The /link-local 350 may be the link-local IP address. For example, the /link-local 350 may be for cases where NAT is used. The /link-local 350 may be, for example, the Ethernet address of the surrogate server.

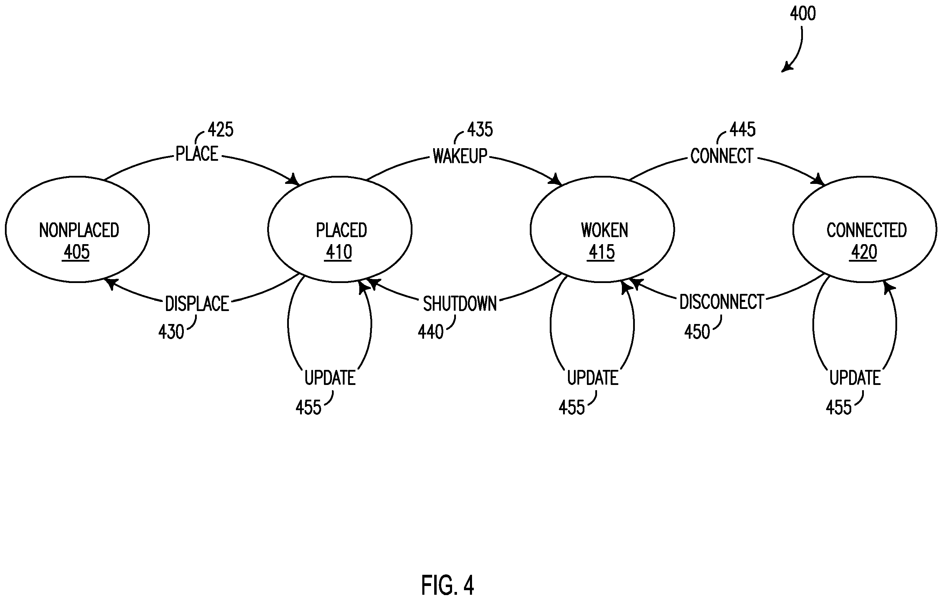

The scopes and/or namespaces described herein may be published to the network. A surrogate server (e.g., a surrogate server at an eNAP) may be identified through the path /root/location/nodeID/FQDN/link-local in the namespace. Information items may be used under a surrogate scope (e.g., each surrogate scope), so that the surrogate management procedures may be operated. As shown as in FIG. 3, 4 categories, for example, may be used under the information item /state 360 (i.e., ServerState 370, ManagementCommand 380, ServerStatistics 390, and NetworkStatistics 395).

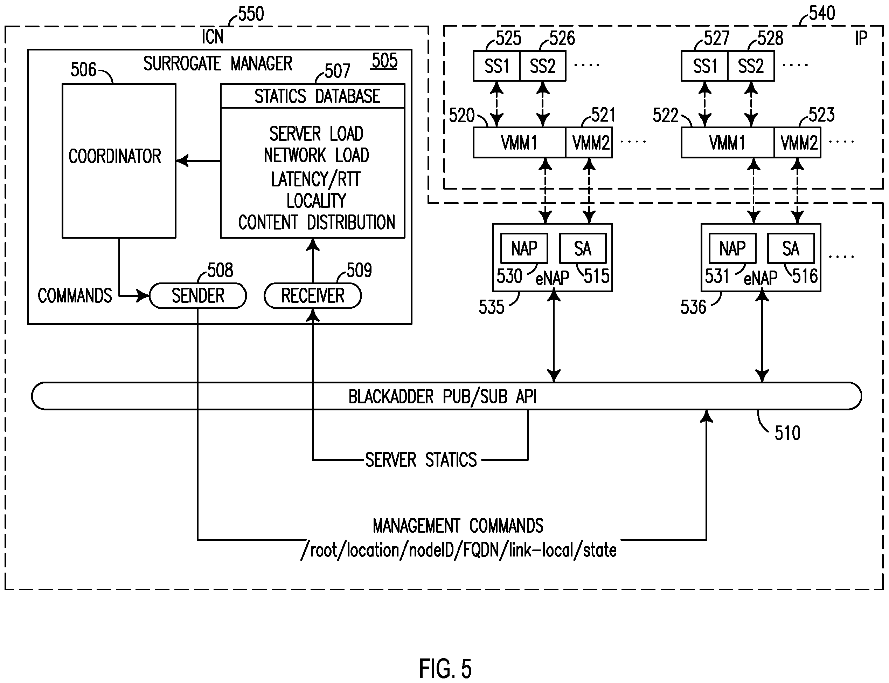

Server state information 370 may indicate the current surrogate server state. The server state information 370 may be populated by the eNAP. The server state information 370 may utilize the virtual machine manager (VMM) interface in FIG. 5 between the eNAP and a VMM in the surrogate server. It is noted that a VMM can be implemented at any suitable point in a network. For example, a VMM can be a standalone virtual functional module which can be placed in one of the network entities in the IP network (e.g., an SS). A VMM can be responsible for controlling one or more SSs; and the VMM can manage a number of virtual machine (VM) images to be placed in the SSs. For example, an XML-based encoding of the server state information 370 may be used. The server state information 370 may be encoded using other type-value encoding. A bit field option in a single byte may be used to indicate state information. The SM may subscribe to the server state information. The SM may allow management decisions to be made for individual surrogate at an eNAP in the system.

Server state information 370 can indicate one or more server states. In the example surrogate management namespace 300, NONPLACED state 405 may indicate that the surrogate server is identified in a database, but that a VM image is not available for a target FQDN in the surrogate server. The database may host all surrogate server states, and may reside in the SM for management purposes. PLACED state 410 may indicate that the surrogate server is identified in the database, and that a VM image is available for the target FQDN in the surrogate server. Additional storage costs may result for servers being put into the PLACED state 410. WOKEN state 415 may indicate that the surrogate server is identified in the database with a VM image available for the target FQDN in the surrogate server, and that the VM that hosts the VM image is booted and/or ready to be connected. Additional computational costs may result for servers being put into the WOKEN state. CONNECTED state 420 may indicate that the surrogate server is identified in the database with a VM image available for the target FQDN in the surrogate server. The CONNECTED state may indicate that the VM that hosts the VM image is WOKEN and/or connected to the network. The CONNECTED state may be a working state of a surrogate server. Additional operational costs may result for servers being put into the CONNECTED state.

Management commands 380 may be published by a SM based on data and/or criteria from surrogate management. The surrogate management criteria may include server statistics 390 and/or network statistics 395. Management commands may be similar to the server state. XML, type-value, and/or bit encodings may be used. The eNAP may subscribe to the management state under the scope hierarchy of /root/location/nodeID/FQDN/link-local for a surrogate. The eNAP may subscribe to the scope hierarchy /root/location /nodeID. The eNAP may be notified of a change in information under its own nodeID scope. If instructions are received from a service provider (SP), SM may issue a management command, it may utilize the surrogate platform (e.g., communications architecture 500) to appropriately control the VMM in the surrogate node according to the received information.

Exemplary management commands 380 include Place, Displace, Wakeup, Shutdown, Connect, Disconnect, Update and the like. For example, Place may be used if the SM receives a request from SP to issue a service request to a group of potential servers matching its storage and computational requirements. Displace may be used if the SM receives a message from SP indicating that the service is no longer needed by the service provider and is to be removed from specific servers. Wakeup may be used if the SM receives a request from the SP to instruct the network to wake up a set of servers (e.g., to be used in the near future). Connect may be used if the SM receives a request from the SP to instruct the network to connect servers to activate service availability to end users. Disconnect may be used if the SM receives a request from the SP to instruct the network to disconnect servers to deactivate service availability to end users. Shutdown may be used if the SM receives a request from the SP to shut down specific servers. Update may be used if the SM receives a request from the SP to update specific servers.

Server statistics 390 may be used to report appropriate information regarding the corresponding SS to the SM. The SM may use the server statistics for its decision making process. For example, server statistics 390 may be similar to the server state information 370 in that both can be considered in s surrogate selection process, and that both may be encoded similarly. XML, type-value, and/or bit encodings may be used. Examples of server statistics collection are further discussed herein. Example server statistics 390 usable in the surrogate management namespace 300 include available disk space, available memory storage space, processing capability, server load, and the like.

An example of the above parameters is listed in Table 1. The specifics of actual usage can be implementation dependent.

Table 1: Example parameters for compute, storage, and network information of a surrogate server.

| Category | Parameter | Description |
|---|---|---|
| Compute | # of cores<br># of central processing units (CPUs)<br>Virtualization type | cat1(Docker),<br>cat2(kernel-based virtual machine(KVM)),<br>cat3 |
| Store | Random Access Memory (RAM)<br>Swap<br>Size | |
| Network | Network interface cards (NICs)<br>+IPs+Speed | |

Network statistics 395 may be made available for the decision making process of the SM. For example, network statistics 395 may be similar to server state information 370 in that both can be considered as surrogate selection processes, and that both may be encoded similarly (e.g., XML, type-value, and/or bit encodings may be used). Example collection of such network statistics is discussed herein. The network statistics may include average latency to for one or more serving WTRUs, available fronthaul bandwidth to one or more serving WTRUs, available backhaul bandwidth from an origin server, and the like.

Server statistics 390 and/or network statistics 395 may be defined and/or made revisable to allow the statistics to be refreshed in the event of surrogate upgrading and/or downgrading. The SM may be able to obtain knowledge of server statistics 390 and/or network statistics 395 of one or more available surrogates from published information items and may be able to conduct surrogate management functions (e.g., issuing management commands 380). By obtaining this information, the SM may, for example, select, or allow origin servers to select, a list of surrogate servers for content migration based on the information.

FIG. 4 is a state transition diagram illustrating example state transitions for SS management. A Surrogate Finite-state Machine (SFSM) 400 may be used to manage the operational state of a SS. Example SFSM 400 may run on an SM and includes the surrogate server states NONPLACED 405, PLACED 410, WOKEN 415, and CONNECTED 420 and management commands PLACE 425, DISPLACE 430, WAKEUP 435, SHUTDOWN 440, CONNECT 445, DISCONNECT 450, and UPDATE 455, which can cause various transitions among states 405, 410, 415, 420. It is noted that in other implementations of a SFSM, additional, fewer, and/or alternative states and/or commands may be used. Surrogate server states 405, 410, 415, 420 may correspond to server state information 370 as described with respect to FIG. 3, and management commands 425, 430, 435, 440, 445, 450, 455 may correspond to management commands 380 as described with respect to FIG. 3.

Example SFSM 400 defines surrogate server states 405, 410, 415, 420 and allowed transitions between those states. For example, in SFSM 400 the surrogate server cannot transition states from NONPACED 405 to CONNECTED 420 without first transitioning through PLACED 410 and WOKEN 415 states. It is noted that SFSM 400 is an example implementation, and other implementations may permit the surrogate server to perform other transitions, such as transitioning from NONPACED 405 to CONNECTED 420 without transitioning through the PLACED 410 and WOKEN 415 states.

The SFSM 400 may be implemented as an internal module in the SM, and may be a part of the functionality of the SM. The SM may publish the management commands 425, 430, 435, 440, 445, 450, 455 via ICN semantics to the ICN network based on the results of a surrogate selection algorithm. The SFSM 400 may be implemented using a simple linear search of a state table, e.g., stored at the SM. One or more of the following set of variables may be used: CurrentState, NextState, ManagementCommand, and the like. CurrentState may be a variable that holds information about the current state the surrogate is in. NextState may be a variable that holds information about the state to be switched into when a management command is received. ManagementCommand may be a variable that hosts a management command that may trigger transitions between states. Table 2 is a pseudocode listing which illustrates an example implementation of SFSM 400 which describes example operation when the SS in in the PLACED state. EventID corresponds to the commands 425, 430, 435, 440, 445, 450, 455 as shown and described with respect to FIG. 4. For this example, where the SS is in the state PLACED, only the WAKEUP 435, UPDATE 455, and DISPLACE commands are defined, as can be seen from the structure of SFSM 400.

TABLE 2:

```
/*State: Placed*/
case 1:
   {
   /*->Place*/
   if (EventID==PLACE) NextState = "Not defined";
   /*-> Displace*/
   else if (EventID==DISPLACE) NextState = State [DISPLACE];
   /*->Wakeup*/
   else if (EventID==WAKEUP) NextState = State[WOKEN];
   /*->Connect*/
   else if (EventID==CONNECT) NextState = "Not defined";
   /*->Disconnect*/
   else if (EventID==DISCONNECT) NextState = "Not defined";
   /*->Shutdown*/
   else if (EventID==SHUTDOWN) NextState = "Not defined";
   /*->Update*/
   else if (EventID==UPDATE) NextState = CurrentState;
   /*->Others*/
   else NextState = "Not defined";
   }
   break; }
```

It is noted that the UPDATE command may be a special command in the SFSM 400, where a server in the PLACED/WOKEN/CONNECTED will update itself and then be automatically switched to the original state once the update is completed.

FIG. 5 is a block diagram illustrating an example communications architecture 500 for surrogate management. Example architecture 500 includes various components and interfaces, and is operable to allow an SM 505 to send an ICN packet through an application program interface (API) 510 (e.g., the Blackadder™ or other publish/subscribe (pub/sub) API) to the SA. Blackadder™ is an information-centric networking prototype developed in the PURSUIT research project. Architecture 500 is operable to allow an SA (e.g., SA 515, 516) to translate the ICN packet to an IP packet and send it to a VMM (e.g., VMM 520, 521, 522, 523). Example surrogate communication architecture 500 is operable to permit the VMM to send internal operational commands to an SS (e.g., SS 525, 526, 527, 528) to prompt state transitions. Components of example baseline surrogate communication architecture 500 include Surrogate Manager (SM) 505, Network Attachment Point (NAP) 530, 531, Surrogate Agent (SA) 515, 516, Virtual Machine Manager (VMM) 520, 521, 522, 523, and Surrogate Server (SS) 525, 526, 527, 528.

A Surrogate Server (SS) can include a physical server, or a component of a physical server, connected to a network and capable of (e.g., in terms of memory/processing capability) handling the service placement as instructed from a SM. There can be a 1-to-many relationship between a VMM and SSs. In other words, the VMM may be in communication with several SSs. The VMM can manage a number of VM images installed on several SSs. For example, when a management command is received by the VMM, it may command the SS, e.g., to PLACE or DISPLACE. The SS may be responsible for storing data and/or server configurations per FQDN and may provide surrogate services to end users.

A Surrogate Manager (SM) (e.g., SM 505) can include a physical server or component of a physical server capable (e.g., in terms of memory/processing capability) of managing and maintaining all (or a subset of) surrogates in the surrogate network and may be the only entity which can dictate a change in state of any surrogate. All other network functions may be executive entities of the commands received by the SM. The SM responsible for coordinating the surrogate network can be specified based on new server requests and resources available in the surrogate network. The SM can store the information reported and can share this information for the decision-making operation. The SM may have the capability (e.g., in terms of memory/processing capability) to determine whether or not a change in the number of surrogates or their location is required and may be responsible for the selection of the best surrogate server based on specific logic, e.g., pricing based resource allocation logic, which is further discussed herein.

It is noted that there can be multiple SMs in the network, each of which can be configured differently to manage different surrogate networks. The configuration of the SM depends on specific application requirements, and can be provider specific, or decision-logic specific. In a provider specific SM, the surrogate manager may be configured specifically with and act on one or more dedicated FDQNs (e.g. google.com). In a decision-logic specific SM, the surrogate manager may be configured with different decision-logic (e.g., request-based or latency-based).

Decision-making functionality (e.g., performed by coordinator functionality inside the SM) can be configured differently for each SM as required from the network. Furthermore, the SM can be capable of deriving a list of allowed FQDNs for all (or each of) the VMMs in the network for purposes of access control.

The SM 505 can include coordination circuitry 506, a statistics database, e.g., for storing server load, network load, latency, locality, and/or content distribution, which is in communication with the coordination circuitry, transmission circuitry 508, e.g., for sending management commands via API 510, and receiver circuitry 509, e.g., for receiving server statistics via API 510. These components are described in further detail below.

A Surrogate Agent (SA) may be a physical server or component of a physical server capable (e.g., in terms of memory/processing capability) and may function as an agent of the SM by communicating with IP endpoints. There can be many SAs in a surrogate system, and an SA may be attached to a NAP (e.g., in an eNAP, 535, 536). The functions of SA can include communicating with an SM and VMM for information exchange (e.g., Management Command or Server Status) and deregistration and registration of a FQDN based IP service endpoint at a NAP.

A Network Attachment Point (NAP) may be a physical server or component of a physical server capable (e.g., in terms of memory/processing capability) which can translate IP-level protocols into ICN using appropriate ICN namespaces. A NAP may also provide standard IP gateway functionality (e.g., IP address assignment or network address translation if desired) which can allow an IP service endpoint to communicate with another IP service endpoint over an ICN-based core network without needing to understand ICN-related communication semantics. There can be a 1-to-1 relationship between an SA and a NAP.

A Virtual Machine Manager (VMM) may be a physical server or component of a physical server capable (e.g., in terms of memory/processing capability), and there may be a 1-to-many relationship between an SA and VMMs. As used herein, the term VMM does not refer to a hypervisor as the term is used in the virtualization literature. As used herein, a VMM may parse commands from an SA. The VMM may implement modules that encapsulate the VM control logic and may implement modules that encapsulate mechanisms to implement the aforementioned logic. The VMM may implement modules that encapsulate its own internal representation of compute, store, and networking elements of an external cloud. The VMM may implement wrapper modules that encapsulate necessary interactions between the VMM and an external cloud for running VMs, and may also implement modules that query the external cloud for compute, store, and network statistics. One example of an external cloud is OpenStack™.

As shown in FIG. 5, SSs 525, 526, 527, and 528 may operate in an IP domain 540. For example, traffic coming in and/or out of an SS may be IP packet traffic. A number of SSs may be managed via a single virtual machine manager (VMM). For example, VMM 520 is in communication with SSs 525 and 526.

A VMM may be attached to one or more SAs. For example, VMM 520 is in communication with SA 515. An SA may be co-located with a Network Attachment Point (NAP). The SA together with its co-located NAP may form an extended NAP (eNAP). For example, NAP 530 and SA 515 are co-located and form eNAP 535. A SA may manage a number of VMMs via an IP protocol. A SA may be implemented on top of an API e.g., the Blackadder™ or other pub/sub API, which may allow the SS/VMM to communicate with the ICN network 550. The SA may receive management commands via an ICN packet, reformat it to an IP packet, and/or send it to a VMM. The SA may receive server statistics of an SS reported from a VMM via an IP packet, reformat it to an ICN packet, and /or send it to an SM.

A surrogate manager (SM) may coordinate one or more SSs based on the server/network statistics published by one or more SSs. The SM may be or may include one or more of the following models: a receiver, a sender, a statistics database, SFSM, a coordinator, and/or the like. A receiver may receive server statistics from one or more SAs. A sender may publish management commands to one or more SAs. A statistics database may store data statistics of one or more SSs. The data statistics may include server load, network load, latency, RRT, and the like. SFSM may store the states of one or more SSs and/or perform state transition calculation between states. A coordinator may, based on criteria as reported from SSs, coordinate one or more SSs by determining the management commands and/or associated scope path to be published.

A Virtual Machine Manager (VMM) may be a surrogate management device for one or more virtualized surrogate servers. The VMM may enable the configuration and management of status. The VMM may enable networking and storage resources of SS nodes in a virtualized environment. The VMM may be implemented between an SS and an SA. As discussed earlier, the VMM can be implemented at any suitable point in a network. For example, a VMM can be a standalone virtual functional module which can be placed in one of the network entities in the IP network (e.g., an SS). A VMM can be responsible for controlling one or more SSs; and the VMM can manage a number of VM images to be placed in the SSs.

The VMM may perform a number of functions. The VMM may receive a pub command from an SA via an SA-VMM interface, interpret the command, and/or send and executable commands to an SS to change a status of a server. The VMM may receive network statistics and/or server statistics reports from an SS. The VMM may send the statistics to an SA for ICN publication. The VMM may detect an unavailable SS if an SS is unavailable and/or may report the event to an SA, which may publish the server state of the SS as disconnected. An SM may select another SS when an SS reported to be unavailable. The interaction between an SA and a VMM may occur via an SM-SA interface and may be implemented via a simple network management protocol (SNMP). Management commands may be delivered to the VMM for execution. The interaction between as SS and a VMM may be implemented via commands using Linux inter-process communication (IPC). This may allow multiple processes to communicate with one another via one or more of UNIX pipes, message queues, networking sockets, and/or the like.

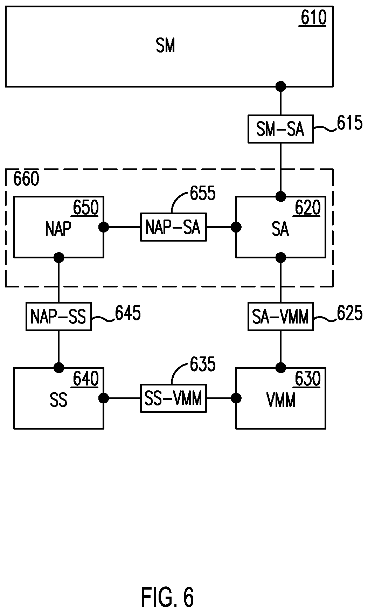

FIG. 6 is a block diagram of an architecture 600 which illustrates example components and interfaces that may be used for surrogate management. Architecture 600 is a simplified illustrative representation of components and interfaces of a surrogate management architecture similar to architecture 500. Architecture 600 includes a SM 610, SA 620, VMM 630, SS 640, and NAP 650. NAP 650 and SA 620 may be co-located, for example, to form eNAP 660. Architecture 600 also includes SM-SA interface 615, SA-VMM interface 625, SS-VMM interface 635, NAP-SS interface 645, and NAP-SA interface 655.

SM 610 may publish surrogate management commands to the ICN network via an SM-SA interface 620 with SA 630. Upon receiving the management commands, the SA 630 may inform a VMM 640, using the corresponding commands via an IP packet over SA-VMM interface 650. The commands may be forwarded to an SS 660 via an SS-VMM interface 670 for surrogate state transition.

SM-SA interface 615 is an interface between SM 610 and SA 620 that may be used for receiving and/or confirming a surrogate management command. For example, the SM-SA interface 615 may be used for receiving and/or confirming a server state, network statistics, and/or server statistics. SM-SA interface 615 allows SM 610 to interact with SA 620 within an ICN network. The SA 620 may act as an agent of SM 610 for receiving management commands. The SA 620 may also have a dedicated inter-process interface to NAP 650, NAP-SA 655. The SM-SA interface 615 may use an ICN pub/sub-based communication framework to exchange information.

For example, the interaction between SM 610 and SA 620 via the SM-SA interface 615 may be implemented using a pub/sub procedure via an ICN network. SM 610 may publish a surrogate placement request. The surrogate placement request may be forwarded to SA 620 as a pub/sub process via a rendezvous (RV). The RV can be a standard ICN entity for performing pub/sub matches. A confirmation response may be received by SM 610 from SA 620 based on the pub/sub match performed by the RV. For example, the confirmation response for the completion of surrogate placement may be implemented through pub/sub procedure. The SA 620 may acknowledge, to the SM, a surrogate placement completion event. The RV may inform the origin site that the surrogate placement request is complete. The origin site is a non-ICN entity which can request a surrogate; and may be referred to as a surrogate requester (SR). The SR can include a content provider, or an original server hosting the content, for example.

NAP-SA interface 655 between NAP 650 and SA 620 may allow the NAP 650 and SA 620 to share information available within the eNAP 660 (e.g., FDQN registration information). For example, NAP-SA interface 655 may provide an interface where SA 620 may communicate with NAP 650 within an eNAP via local communication within an eNAP server. The SA 620 and NAP 650 may be co-located in the same node (e.g., eNAP 660). The SA 620 and NAP 650 may perform network functions as a standalone network node (e.g., as an extended NAP (eNAP)). Surrogate management may allow for information (e.g., IP address of the server and/or FDQN registration information) exchange or sharing to be implemented.

The NAP-SA interface 655 may allow SA 620 to register and deregister an IP service endpoint (e.g., SS 640) and its FQDN may be served utilizing FQDN registration procedures. The registration procedure may include all information needed to allow NAP 650 to establish an IP connection with the IP service endpoint using a transport protocol specified by SA 620, (e.g., UDP or TCP). The FQDN registration information provided by SA 620 may also allow NAP 650 to perform steps needed to act as a subscriber for requests towards the given FQDN.

For example, information (e.g., IP address of the SS and/or FDQN registration information) exchange or sharing may be implemented as a pub/sub process. The information exchange or sharing may be implemented remotely via an ICN network and/or if SA 620 and NAP 650 are on the same node the information exchange or sharing may be implemented internally to the node. For example, the information exchange or sharing process may be set as an inter-process communication via one or more of the following: netlink socket, TCP/IP socket, SNMP, and similar local network communication processes.

A SA-VMM interface 625 may be provided, and may include an interface between SA 620 and VMM 630 that may allow a surrogate management command to be received and/or confirmed. A server state, network statistics, and/or server statistics may be received and/or confirmed via the SA-VMM interface 625. The communication via SA-VMM interface 625 may rely on an IP network. Message delivery between SA 620 and VMM 630 may include the delivery of server statistics, network and VMM 630, and/or management commands. The message delivery may be implemented via an ICMP protocol.

This IP-based interface may be used between SA 620 and VMM 630 to send Management Commands and/or receive server status/statistics updates. In the registration procedure, information may be made available to allow a VMM 630 to establish an IP connection towards both SA 620 and the IP service endpoint using a transport protocol (e.g., UDP or TCP). Management commands received by SA 620 will be forwarded to VMM 630 via this interface to allow VMM 630 to execute management and control of VM instances. Server information provided by VMM 630 allows SA 620 to update the SM 610 with the most up-to-date server status. For example, the interaction between the SA 620 and VMM 620 via SM-SA 615 interface may be implemented via an SNMP. The management commands may be delivered to the VMM 630 for execution.

An SS-VMM interface 635 may be provided between SS 640 and VMM 630 and may allow a surrogate management command to be received by the SS and may be confirmed by the SS to the VMM. A server state, network statistics, and/or server statistics may be received and/or confirmed via the SS-VMM interface 635. Surrogate servers may be hosted via a VMM 630 that may be located at the same machine. Communication via SA-VMM interface 635 may rely on internal message exchange. For example, the communication between SA 620 and VMM 630 may be implemented via C++ client/server socket communication. The execution commands in the C++ client/server socket communication may be sent to the corresponding SSs for execution. The execution commands may include boot/shutdown.

A NAP-SS interface 645 may be provided and may allow the NAP to establish an IP-based communication with SS 640 to forward the data plane packets from a WTRU attached to another NAP, e.g., using implicitly known ICN namespace abstractions (e.g. HTTP or IP over ICN). A NAP-SS interface 645 may also be used for data transmission to SS 640, e.g., content pulling during service placement.

Network statistics may be monitored. For example, network usage may be monitored in a number of ways. Traffic flowing through network interfaces may be monitored. For example, various embodiments described herein may use Linux command line tools to monitor traffic flowing through network interfaces. In providing network statistics, the speed at which data is currently being transferred may be measured. One or more of the following may be monitored: incoming and outgoing traffic, bandwidth used by individual processes, and/or latency. When monitoring incoming and outgoing traffic, various tools may be used. A number of mechanisms may be used for generating the traffic report. For example, the mechanisms may include ifstat, iftop cbm, and/or nload reading a /proc/net/dev file to get traffic stats. A pcap library may be used to capture one or more packets. The total size of one or more packets may be determined to estimate a traffic load. The bandwidth used by individual processes may be monitored. Bandwidth used by individual processes may include iftop, iptraf, Nethogs, and/or bmon. Latency may be monitored. The latency may be measured using an ICMP ping. The retrieved network statistics in an area may be obtained by an SA and may be sent to an SM.

Server statistics may be monitored. For example, server statistics of one or more SSs may be monitored and/or reported to an SM. The SM may maintain the status of one or more SSs. For example, the SM may maintain the up-to-date status of one or more SSs in its database. Surrogate server statistics may be monitored by analyzing server states. For example, to monitor the surrogate server statistics, Linux system commands may be used to monitor one or more server states. The Linux system commands may include du, df, lscpu, and the like. The server states may include disk space, memory space, CPU usage, and the like. The statistics may be reported from SS to VMM, and to SA. The SA may periodically publish these statistics to the ICN network. The SM may update the surrogate database.

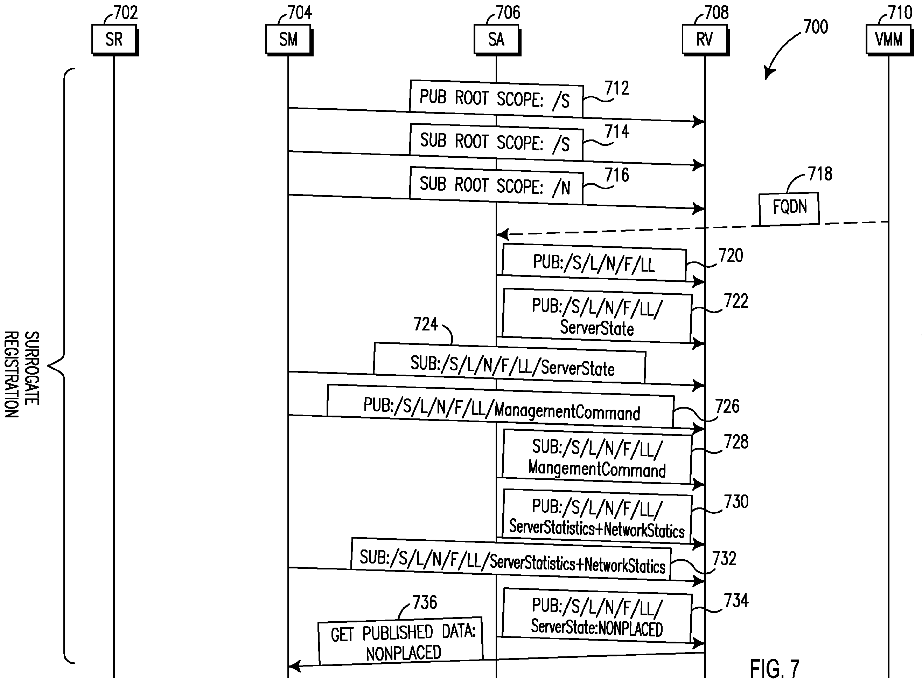

FIGS. 7-9 and 11-15 are message sequence diagrams illustrating example management procedures for the surrogate management framework. Such procedures may utilize the various management commands disclosed herein. The procedures can include resilience control which may be realized via such management commands. These procedures may include registration, deregistration, placement, activation, replacement, and/or resilience control procedures.

FIG. 7 is a message sequence diagram illustrating an example message sequence 700 among a surrogate requester (SR) 702, SM 704, SA 706, RV 708, and VMM 710 for surrogate registration. Message sequence 700 allows SM 704 to register an SS (e.g., SS 640) via SA 706 over an ICN network. RV 708 handles the ICN core function of matching publishers and subscribers. In this way, for example, SM 704 can publish information to the RV 708, and SA 706 can subscribe to receive the information published to the RV 708. In this example, a root scope "S" (/root=/S) is dedicated for surrogate management, and a root scope "N" (/root=/N) is dedicated for network statistics. The scope path may be represented as: /S/L/N/F/LL -> information item -> data, as shown in FIG. 7.

As shown FIG. 7, SM 704 may transmit message 712 to RV 708 to publish to root scope /S. Such messages may include management commands as shown and described with respect to the namespace 300. The SM 704 may also transmit message 714 to RV 708 to subscribe to root scope /S to listen to information published to /S (e.g., by SA 706). The SM 704 may transmit message 716 to RV 708 to subscribe to root scope /N to receive any published network statistics of the ICN network. For example, /N may be a namespace for network statistics. Such network statistics may be published later, for example, by SA 706. VMM 710 may transmit a domain name service (DNS) registered FQDN in message 718 to SA 706. SA 706 can publish sever states and/or statistics using the FQDN in the scope path, which SM 704 can receive and use for management purposes.

SA 706 may publish a path scope /S/L/N/F/LL/ under root scope /S as by transmitting message 720 to RV 708. This path scope can be notated as /S/L/N/F/LL/. Path scope / S/L/N/F/LL identifies a surrogate server SS in the namespace by the path /S/L/N/F/LL (i.e., /root/location/nodeID/FQDN/link-local as discussed earlier). SA 706 functions as an agent of SM 704 in the ICN domain, and handles communications from the VMM for the identified SS which are in the IP domain.

SM 704 may subscribe to the published path scope /S/L/N/F/LL/ if and when it is published. For example, SM 704 may receive a published scope /S/L/N/F/LL/ from SA 706 and may subscribe to /S/L/N/F/LL/NetworkStatistics and/or /S/L/N/F/LL/ServerStatistics as follows. It is noted that the SM 704 does not receive a direct message from SA 706 in this case, rather, the communication is via ICN pub/sub procedures.

SA 706 may publish /S/L/N/F/LL/ServerState by publishing 722 to RV 708. SM 704 may subscribe to /S/L/N/FR/LL/ServerState by subscribing 724 to RV 708, and may thereafter receive state information about the SS from SA 706.

SM 704 may publish the information item /S/L/N/F/LL/ManagementCommand by transmitting message 726 to RV 708. SA 706 may subscribe to /S/L/N/F/LL/ManagementCommand by transmitting message 728 to RV 708 and may thereafter receive management commands from SM 704.

SA 706 may publish /S/L/N/F/LL/ServerStatistics and /S/L/N/F/LL/NetworkStatistics by transmitting message 730 to RV 708. SM 704 may subscribe to /S/L/N/F/LL/ServerStatistics and /S/L/N/F/LL/NetworkStatistics by transmitting message 732 to RV 708 and may thereafter receive server statistics and network statistics from SA 706.

SA 706 may publish /S/L/N/F/LL/ServerState: NONPLACED (i.e., a data value of the ServerState information item which indicates that the SS server state is NONPLACED) by transmitting message 734 to RV 708. SM 704, which earlier subscribed to /S/L/N/FR/LL/ServerState by transmitting message 724 to RV 708, receives the server state information indicating that the SS server state is NONPLACED by receiving message 736 from RV 708.

The SM 704 may publish information item: /S/L/N/F/LL/ManagementCommand by transmitting message 726 to RV 708. The SA may subscribe to /S/L/N/F/LL/ManagementCommand to receive management commands from the SM 704 by transmitting message 728 to RV 708. The initial state for an SS may be assigned to NONPLACED when the registration phase is completed.

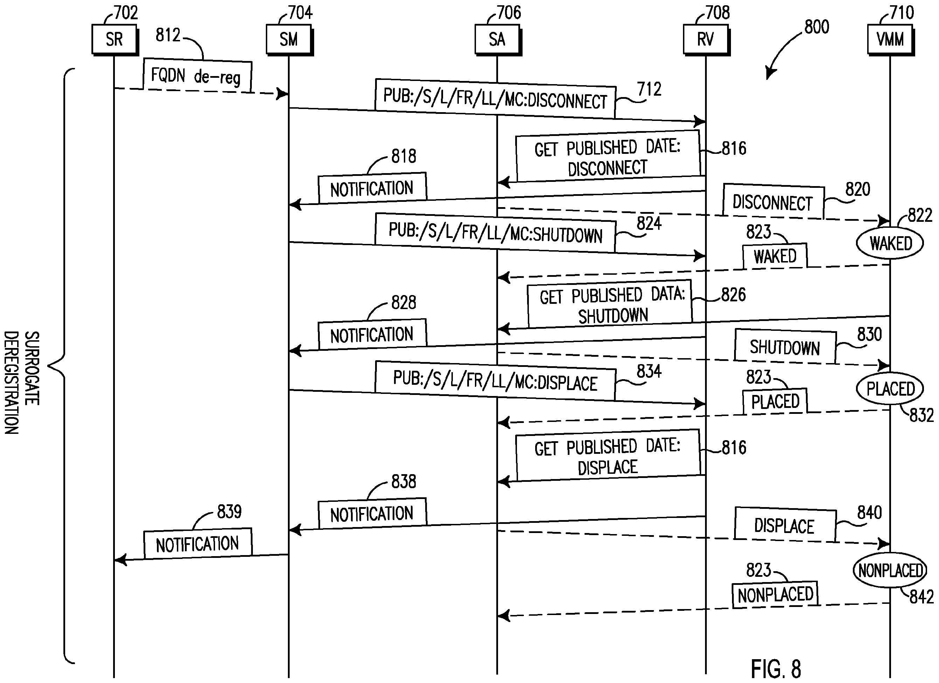

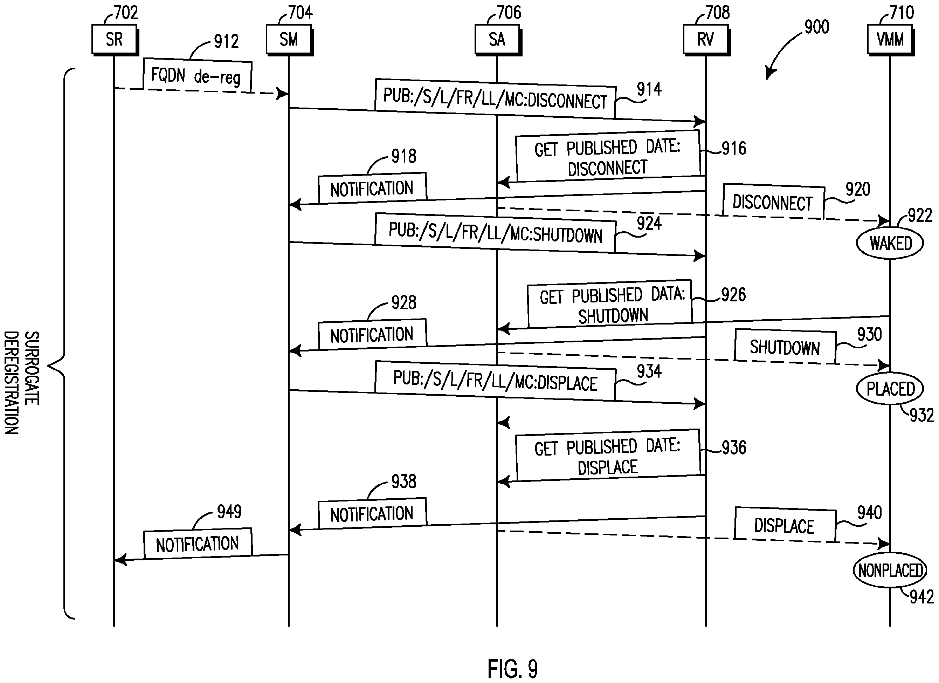

FIGS. 8 and 9 are message sequence diagrams illustrating example message sequences 800 and 900 among SM 704, SA 706, RV 708, and VMM 710 for surrogate deregistration. Message sequences 800 and 900 allow the SM to deregister the SS (e.g., SS 640) via SA 706 over an ICN network. In this example, message sequences 800 and 900 occur later than message sequences 700; thus, for example, SM 704 has already published and subscribed to root scope /S in messages 712 and 714. RV 708 handles the ICN core function of matching publishers and subscribers. In this way, for example, SM 704 can publish information to the RV 708, and SA 706 can subscribe to receive the information published to the RV 708.

Turning to FIG. 8, SR 702 may transmit message 812 to SM 704 to request FQDN deregistration. The SM 704 may publish message 814 to RV 708 for its management command DISCONNECT (here, publishing a data value of information item MC or management command which indicates that the SS server should enter state DISCONNECT. This can be expressed as Pub /S/L/N/F/LL/MC:DISCONNECT.) RV 708 can confirm the successful publication to SM 704 with a notification message 818. The SA 706, which is subscribed to receive management commands, may receive the published DISCONNECT command from RV 708 in message 816, and can issue a local DISCONNECT command to VMM 710 in message 820. The VMM 710 may transfer the DISCONNECT command to the SS, which may execute it, causing the SS to enter WOKEN state 822. VMM 710 may thereafter notify the SA 706 of the WOKEN state of the SS in an IP message 823. It is noted that in the figure, the dashed arrows indicate IP messaging, and the solid arrows indicate ICN messaging.

The SM 704 may transmit message 824 to RV 708 to publish management command SHUTDOWN (here, publishing a data value of information item MC or management command which indicates that the SS server should enter state SHUTDOWN. This can be expressed as Pub /S/L/N/FR/LL/MC:SHUTDOWN.) RV 708 can respond to SM 704 with a notification message 828. The SA 706, may receive the published SHUTDOWN command from RV 708 in message 826, and can issue a local SHUTDOWN command to VMM 710 in message 830. The VMM 710 may execute the SHUTDOWN command to cause the SS to enter the PLACED state 832. VMM 710 may thereafter notify the SA 706 of the PLACED state of the SS in a local message 833.

The SM 704 may transmit message 834 to RV 708 to publish management command DISPLACE (here, publishing a data value of information item MC or management command which indicates that the SS server should enter state DISPLACE. This can be expressed as Pub /S/L/N/FR/LL/MC:DISPLACE.) RV 708 can respond to SM 704 with a notification message 838. The SA 706 may receive the published DISPLACE command from RV 708 in message 836 and can issue a local DISPLACE command to VMM 710 in message 840. The VMM 710 may execute the DISCONNECT command to cause the SS to enter the NONPLACED state 842. VMM 710 may thereafter notify the SA 706 of the NONPLACED state of the SS in a local message 843. After receiving the notification message 838 from RV 708, the SM 704 may notify the SR 702 that the requested FQDN deregistration request is complete.

Turning to FIG. 9, SR 702 may transmit message 912 to SM 704 to request FQDN deregistration. The SM 704 may transmit message 914 to RV 708 to publish management command DISCONNECT (here, publishing a data value of information item MC or management command which indicates that the SS server should enter state DISCONNECT. This can be expressed as Pub /S/L/N/FR/LL/MC:DISCONNECT.) RV 708 can respond to SM 704 with a notification message 918. The SA 706, which is subscribed to receive management commands, may receive the published DISCONNECT command from RV 708 in message 916, and can issue a local DISCONNECT command to VMM 710 in message 920. The VMM 710 may execute the DISCONNECT command to cause the SS to enter WOKEN state 922..

The SM 704 may transmit message 924 to RV 708 to publish management command SHUTDOWN (here, publishing a data value of information item MC or management command which indicates that the SS server should enter state SHUTDOWN. This can be expressed as Pub /S/L/N/FR/LL/MC:SHUTDOWN.) RV 708 can respond to SM 704 with a notification message 928. The SA 706, may receive the published SHUTDOWN command from RV 708 in message 926, and can issue a local SHUTDOWN command to VMM 710 in message 930. The VMM 710 may execute the SHUTDOWN command to cause the SS to enter the PLACED state 932.

The SM 704 may transmit message 934 to RV 708 to publish management command DISPLACE (here, publishing a data value of information item MC or management command which indicates that the SS server should enter state DISPLACE. This can be expressed as Pub /S/L/N/FR/LL/MC:DISPLACE.) RV 708 can respond to SM 704 with a notification message 938. The SA 706 may receive the published DISPLACE command from RV 708 in message 936 and can issue a local DISPLACE command to VMM 710 in message 940. The VMM 710 may execute the DISCONNECT command to cause the SS to enter the NONPLACED state 942.. After receiving the notification message 938 from RV 708, the SM 704 may notify the SR 702 that the requested FQDN deregistration request is complete.

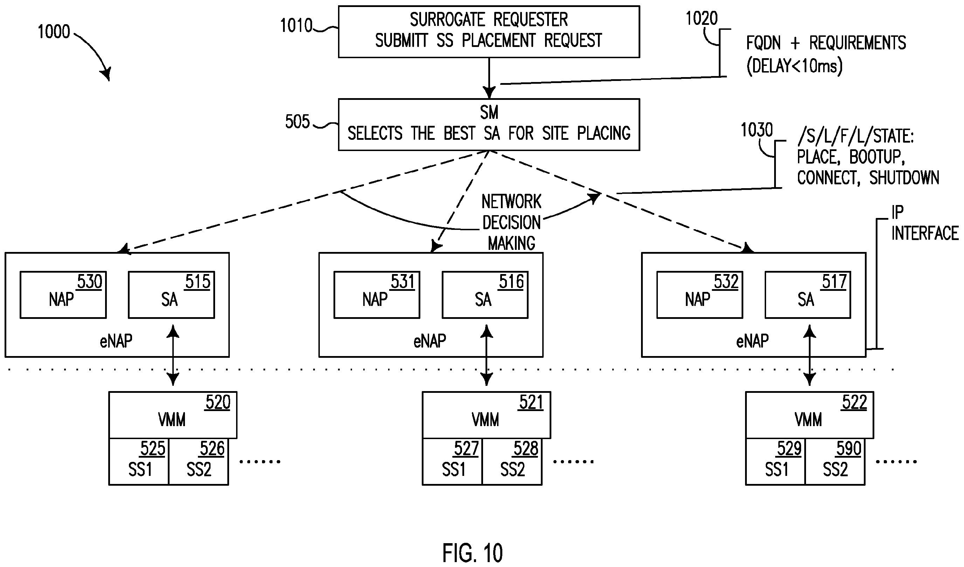

FIG. 10 is a block diagram of various elements of architecture 500, and illustrating example operational procedures 1000 that may be used for surrogate placement. As shown in FIG. 10, an origin site (e.g., surrogate requester (SR)) 1010 may request a surrogate placement to the SM 505 by transmitting criteria 1020 (e.g. a maximum delay requirement) to SM 505. The SM 505 may determine which of SSs 525, 526, 527, 528, 529, 530 may be selected for surrogate placement based on one or more of the following: a criterion or criteria to be met, current network statistics, the server state and/or statistics of available SSs 525, 526, 527, 528, 529, 590. The SM 505 may publish the selected SS with a management command (e.g. ManagementCommand) 1030. Upon receiving the network-wide decision from the SM 505, the SA may send the decision message from the SM 505 to the VMM 520 via an IP message. The VMM 520 may determine whether the surrogate placement request may be granted based on the current load of its SSs. The VMM 520 may reconfigure itself (e.g., when necessary). The VMM 520 may assign the SS for surrogate migration action. Once the migration is completed, the VMM 520 may notify the SM 505 via an SA 515, 516, 517 that the requested content may be made available in the SS. It is noted that a VMM can be implemented at any suitable point in a network. For example, VMM 520 can be a standalone virtual functional module which can be placed in one of the network entities in the IP network (e.g., an SS). A VMM can be responsible for controlling one or more SSs.

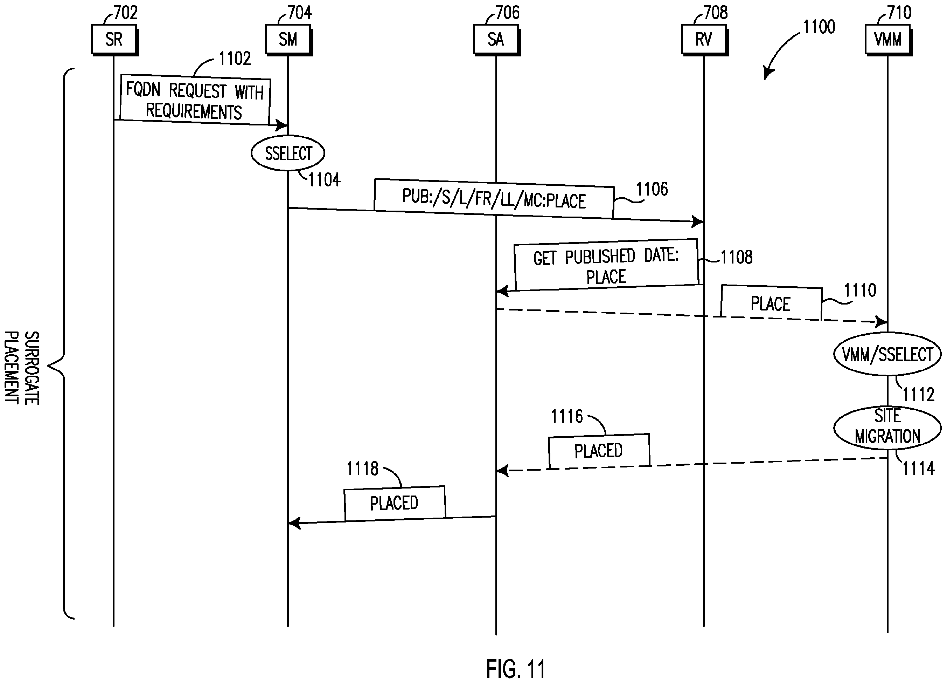

FIG. 11 is a message sequence diagram illustrating an example message sequence 700 among a surrogate requester (SR) 702, SM 704, SA 706, RV 708, and VMM 710 for surrogate placement. For the purposes of this example only, it is assumed that only one single FQDN can be assigned to a single SS.

SR 702 can send a message 1102 to SM 704 to request that an SS be assigned to the FQDN. The request message 1102 can include requirements. These requirements may include, for example, the disk space, cpu demands, or network requirements. The SM 704 may perform one or more actions 1104 to select an SS to place. Actions 1104 may be based on the requirements and/or a shortest path rule.

The SM 704 may transmit a message 1106 to RV 708 to publish /S/L/N/F/LL/MC: PLACE(H,C,S,N), which is a data value of the ManagementCommand information item which indicates a command to place an SS for the FQDN. The command PLACE can include values from the set (H,C,S,N), where H stands for handler ID for the request (e.g., repository server), C stands for computation request, S stands for storage request, and N stands for network request.

SA 706, which is subscribed to receive management commands (see message 728 in FIG. 7), may receive the published PLACE command from RV 708 in message 1108.

SA 706 may transmit an IP message 1110 to VMM 710 to instruct placement of an SS.

The VMM 710 may execute the PLACE command to select a suitable VMM and an SS based on a current load in action 1112. The VMM 710 may migrate the site to the selected SS in action 1114, and transmit a message 1116 to SA 706 to indicate the SS state as PLACED. SA 706 can transmit a message 1118 to SM 704 to inform SM 704 of the PLACED state of the SS.

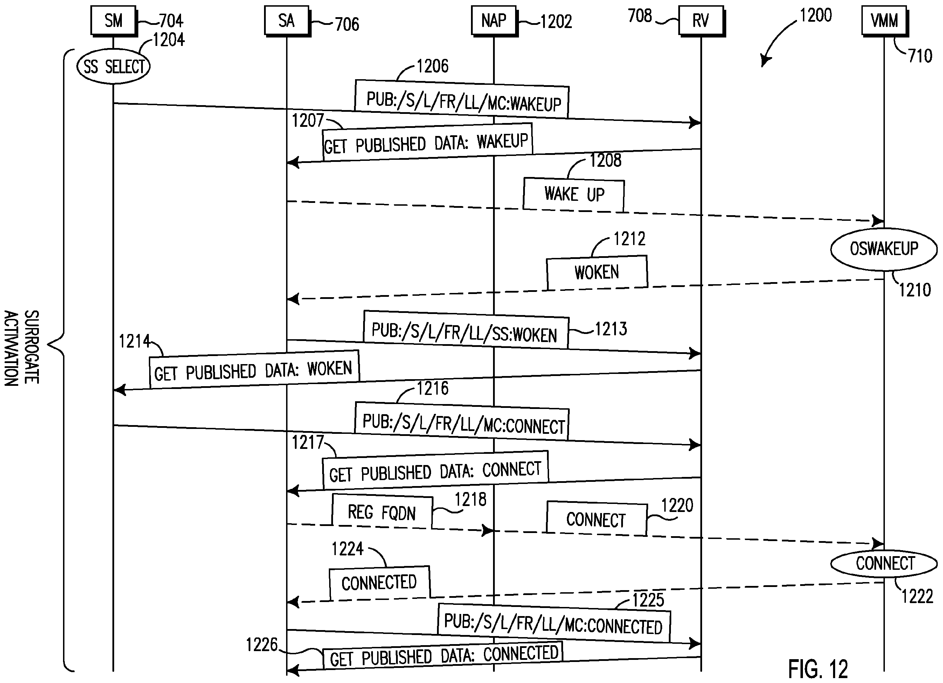

FIG. 12 is a message sequence diagram illustrating an example message sequence 700 among a SM 704, SA 706, NAP 1202, RV 708, and VMM 710 for surrogate activation. After a surrogate site is placed, the SM 704 may connect an SS using management commands (e.g., WAKEUP and/or CONNECT). A WAKEUP command may inform the SS to wake up a system. A CONNECT command may be used after an SS is ready to connect to network.

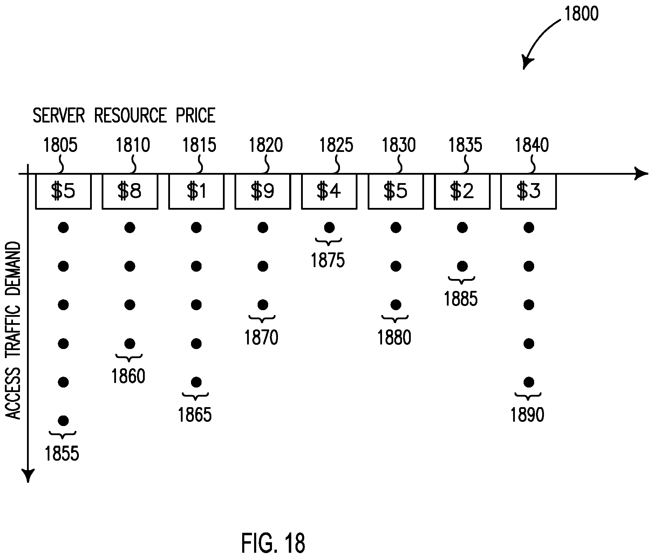

As shown in FIG. 12, based on its decision logic SM 704 may select an SS for activation in action 1204. The decision can be based on the server and network statistics to which SM 704 subscribed in message 732 for example, and can be made based on cost considerations as will be discussed with respect to FIG. 18 for example. SM 704 may publish a WAKEUP management command by sending a message 1206 to RV 708. SA 706, which is subscribed to receive such messages, receives the WAKEUP command in message 1207. The WAKEUP command can include further information, such as WAKEUP(time), e.g., to wake up the server in 30 seconds. The WAKEUP command can be notated as /S/L/N/F/LL/MC: WAKEUP.

SA 706 may send a WAKEUP command to VMM 710 in message 1208 over an IP interface (noted by a dotted arrow). VMM 710 may decide, based on its logic, to WAKEUP the selected SS in action 1210, in which case VMM 710 may transmit a message 1212 to SA 706 over the IP interface reporting the SS state as WOKEN. SA 706 thereafter may transmit a message 1213 to RV 708 publishing the SS state as WOKEN. SM 704, which is subscribed to receive such messages, receives message 1214 reporting the SS state as WOKEN.

SM 704 may publish a CONNECT command by sending a message 1216 to RV 708. The CONNECT command can be notated as /S/L/N/F/LL/MC:CONNECT. SA 706, which is subscribed to receive such messages, receives the CONNECT command in message 1217 from RV 708 and may send message 1218 to NAP 1202 over an IP interface to request registration of a FQDN of the origin site. NAP 1202 may thereafter transmit a CONNECT command to VMM 710 over an IP interface in message 1220. VMM 710 may connect the selected SS in action 1222, and may report that the SS is in the CONNECTED state by sending message 1224 to SA 706 over an IP interface. SA 706 can report the SS CONNECTED state by publishing message 1225 to RV 708. SM 704, which is subscribed to receive such messages, receives the report from RV 708 message 1226.

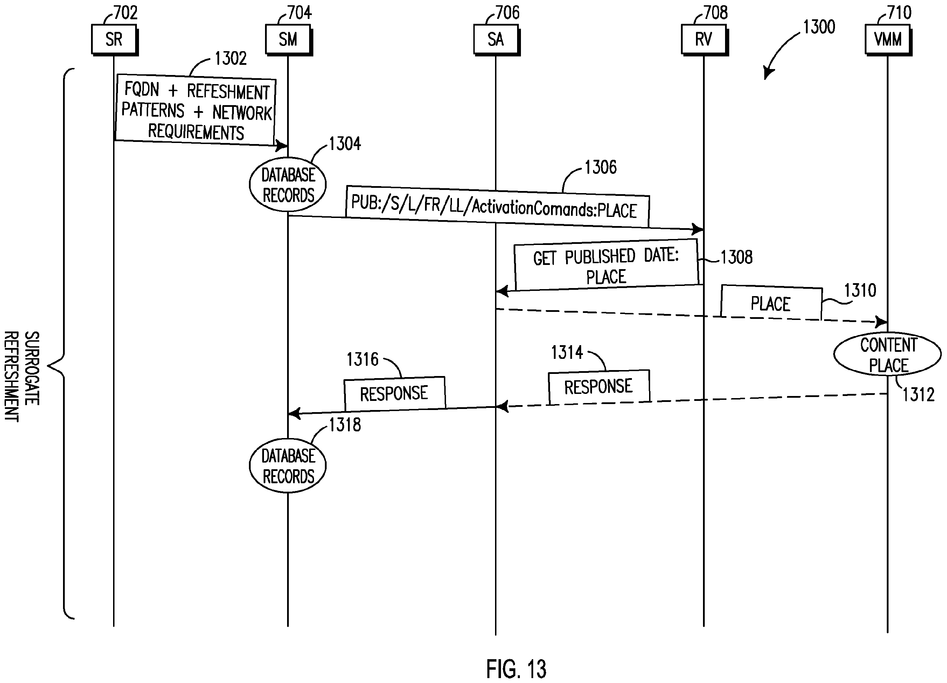

FIG. 13 is a message sequence diagram illustrating an example message sequence 700 among a SR 702, SM 704, SA 706, RV 708, and VMM 710 for surrogate replacement or refreshment. The content of an origin site may change over time. Surrogate refreshment patterns may be provided to keep the corresponding SS content fresh based on the requirements of the SR. Surrogate refreshment procedures may regulate periodic refreshment at the time of the service placement in order to keep content updated. Non-periodic updates initiated by the service provider are further described herein.

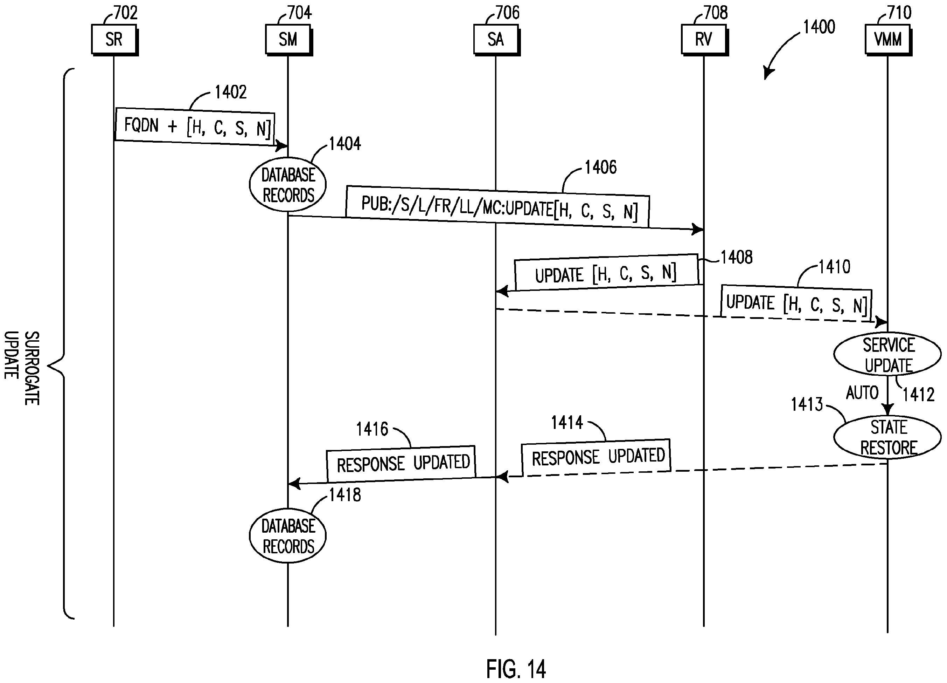

FIG. 13, illustrates messaging relating to surrogate refreshment, where new content (e.g., a new FQDN site) is copied to an SS which has not yet received the content. Existing content in the SS is not changed. Surrogate refreshment is periodic and may occur periodically. The refreshment period may be defined by the SR. (Non-periodic updates are termed surrogate updates, and are discussed with respect to FIG. 14.)

In example message sequence 1300, SR 702 may send a message 1302 to SM 704 which includes the target FQDN refreshment patterns, and/or network requirements. Refreshment patterns can be defined in terms of minimum (Min) and maximum (Max) for example, where Min can be an amount of time (e.g., in minutes) that content without an explicit expiry time should be considered "fresh". Max can be an upper limit on how long content without an explicit expiration time will be considered fresh. Network requirements can refer, e.g., to bandwidth, latency, etc. which the requester can request together with the FQDN. After receiving message 1302, SM 704 may store the refreshment pattern and/or network requirements for the FQDN in a database 1304 or other storage. The SM 704 may transmit a message 1306 to RV 708 to publish a PLACE command accordingly. For example, the PLACE command may be expressed as /S/L/N/F/LL/ManagementCommand: PLACE.

SA 706, which is subscribed to receive management commands (see message 728 in FIG. 7), may receive the published PLACE command from RV 708 in message 1308. SA 706 may transmit message 1310 to VMM 710 with the PLACE command to instruct surrogate replacement and/or content refreshment in the assigned SS. Surrogate replacement in this context refers to copying to a new SS. Surrogate refreshment in this context refers to updating the content in the assigned SS. The VMM command the SS to replace the content with the updated content from the origin server in action 1312. To save bandwidth, only updated content from the origin server may be replaced. After updating the SS, the VMM 710 may transmit a message 1314 to notify SA 706 that the SS has been updated. SA 706 may transmit message 1316 to notify SM 704 that the SS has been updated. SM 704 records the fact that the SS has been updated in database 1318 or other storage.

FIG. 14 is a message sequence diagram which illustrates messaging relating to surrogate updating. Example surrogate update procedure 1400 is similar to the surrogate refreshment procedure 1300 described above, but allows SM 704 to handle non-periodically forced updates, e.g., as issued from a service provider.

In example message sequence 1400, SR 702 may send a message 1402 to SM 704 which includes the FQDN associated with SR 702, as well as a (H,C,S,N) requirement.

After receiving message 1402, SM 704 may store the requirement in a database 1404 or other storage. The SM 704 may transmit a message 1306 to RV 708 to publish an UPDATE command, including the requirement, accordingly. For example, the UPDATE command may be expressed as /S/L/N/F/LL/ManagementCommand: UPDATE(H,C,S,N). SA 706, which is subscribed to receive management commands (see message 728 in FIG. 7), may receive the published surrogate UPDATE(H,C,S,N) command from RV 708 in message 1408. SA 706 may transmit message 1410 to VMM 710 with the UPDATE(H,C,S,N) command to instruct a surrogate update to the content and/or configuration in the assigned SS.

The VMM 710 may execute the update command to update the content or configuration in the VM image on the SS with the updated content or configuration from the origin server in action 1412. To save bandwidth, only updated content from the origin server may be replaced. After updating the content in action 1412, the VMM 710 may restore the original state of the SS. For example, if the SS was in a CONNECTED state prior to the update, the SS is restored to the CONNECTED state automatically following the update.

It is noted that the execution of the UPDATE command on VMM 710 can result in either an incremental update, where most of the files/configurations are kept, or the update can remove all data/configuration and launch a new download. This execution can be VMM-server specific, and the VMM can determine whether to perform an incremental or full update based on its own criteria.

After updating the SS, the VMM 710 may transmit a message 1414 to notify SA 706 that the SS has been updated. SA 706 may transmit message 1416 to notify SM 704 that the SS has been updated. SM 704 can record the fact that the SS has been updated in database 1484 or other storage.

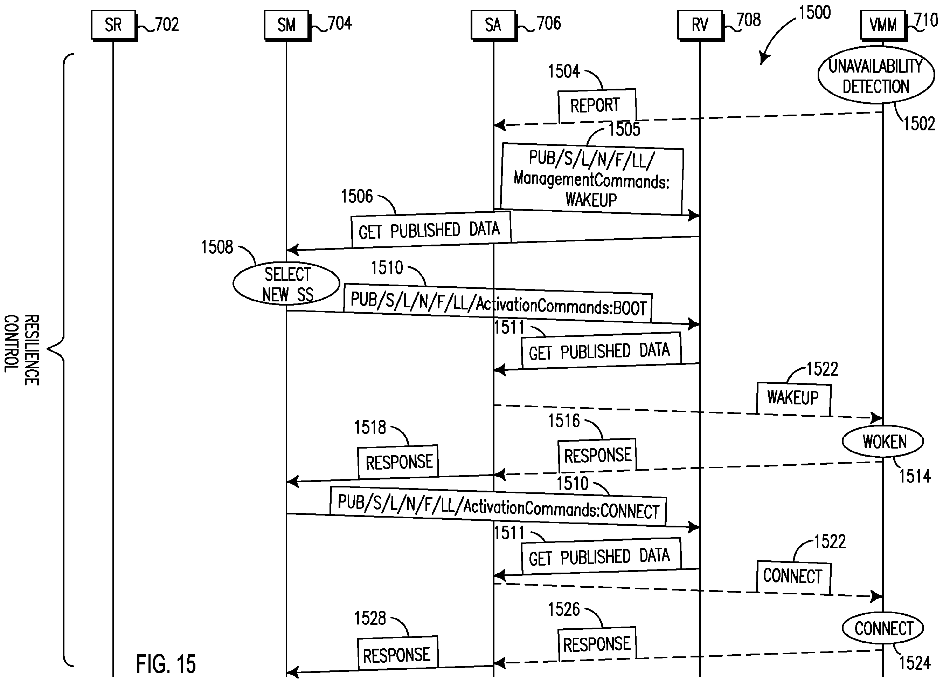

FIG. 15 is a message sequence diagram illustrating an example message sequence 1500 among a SR 702, SM 704, SA 706, RV 708, and VMM 710 for surrogate resilience control. Surrogate resilience control procedures select and activate a replacement surrogate when one or more SSs become unavailable from the network.

VMM 710 may be responsible for detecting when an SS becomes unavailable. If VMM 710 detects that an SS has become unavailable in action 1502, it may transmit message 1504 to SA 706 over an IP interface (indicated by a dotted arrow) to report the unavailability of the SS. After receiving the report in message 1504, the SA may publish a server state of the SS as disconnected by sending message 1505 to RV 708. The DISCONNECTED server state can be notated as /S/L/N/F/LL/SS:DISCONNECTED. SM 704 is subscribed to receive server state publications, and receives a publication of the DISCONNECTED server state in message 1506 from RV 708. Having received message 1506, SM 704 may select another SS in action 1508. The selection may be made based on a price-based selection algorithm, for example.

After another SS is selected, SM 704 may activate that SS by publishing a WAKEUP management command to RV 708 in message 1510 The WAKEUP management command can be notated as /S/L/N/F/LL/MC:WAKEUP. SA 706, having subscribed to receive such messages, receives the WAKEUP management command in message 1511 from RV 708, after which SA 706 can transmit a corresponding WAKEUP command to VMM 710 in message 1512 over an IP interface. VMM 710, having received message 1512, can wakeup a VM on the newly selected SS in action 1514. After action 1514, VMM 710 can inform SA 706 that the SS is in the WOKEN state in message 1516 over an IP interface. SA 706 can inform SM 704 of the WOKEN status of the SS in message 1518. Having been informed that the SS is in the WOKEN state, SM 704 can connect that SS by publishing a CONNECT management command using message 1520 to RV 708. The CONNECT management command can be notated as /S/L/N/F/LL/MC:CONNECT.

SA 706, having subscribed to receive such messages, may receive the CONNECT management command from RV 708 in message 1521 and can transmit a corresponding CONNECT command to VMM 710 in message 1522 over an IP interface. VMM 710, having received message 1522, can connect the new SS in action 1524, and can report the CONNECTED state of the SS to SA 706 in message 1526 over an IP interface. SA 706 can report the CONNECTED state of the SS to SM 704 in message 1528.

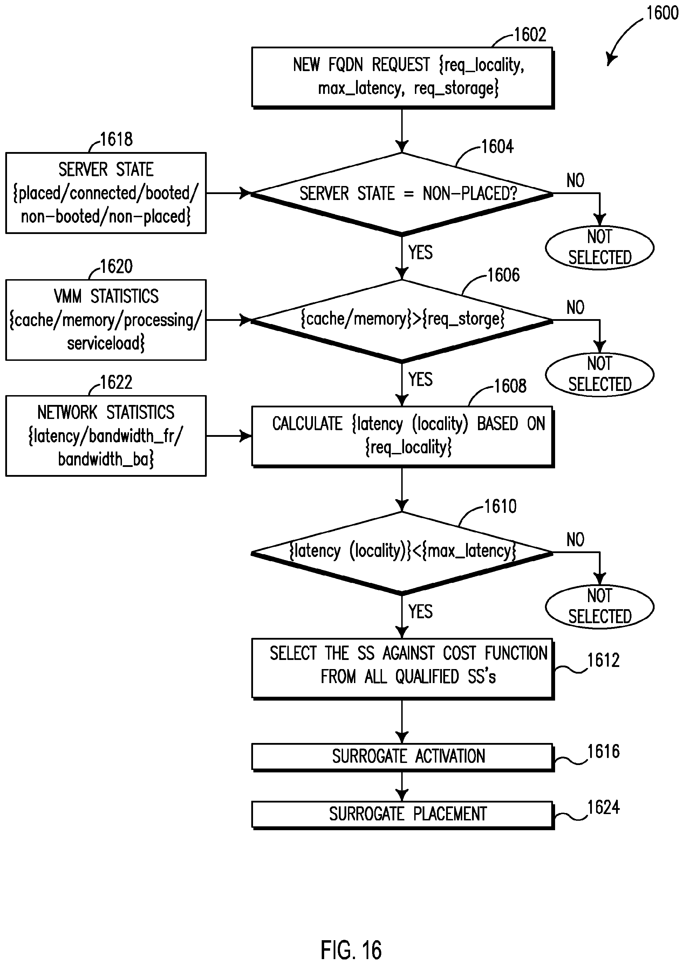

FIG. 16 is a flow chart which illustrates an example surrogate selection process 1600. Decision making process 1600 may be implemented in an SM (e.g., SM 704). It is noted that other decision making actions may occur at a VMM (e.g., 710) based on load balancing. One or more of the information items as disclosed herein may be used for selecting a qualified surrogate. For example, the information items may include server state, server statistics, and/or network statistics. The server state may have a value selected from the set {NONPLACED/PLACED/WOKEN/CONNECTED}. The server statistics may have a value selected from the set {DISKSPACE/MEMSPACE/PROCESSING/LOAD}. The network statistics may be {LATENCY/FRONTHAULBW/BACKHAULBW}.

Example surrogate selection process 1600 may be performed by an SM (e.g., SM 704) upon receiving an FQDN request from origin site The FQDN request may include one or more variables, such as a requested amount of storage, requested locality (i.e., geographic constraints), and maximum latency from the SS to users. SM 704 may check one or more SS registered in its database against the FQDN request variables. The SM may create a list or pool of candidate SS for processing based on the comparison. The requested storage from the request may be checked. An SS with unused capacity in its disk/memory that is less than the requested amount of storage may be removed from a candidate SS pool. Based on the requested locality, the SM may calculate the average latency from the SS to one or more users (e.g., end consumer clients) in the requested locality. This may be done, for example, using recorded data in its database. One or more qualified SSs, having enough storage capacity to accommodate the request, may be checked to compare their average latency from the locality with the requested maximum latency requirement. A qualified SS may be selected for surrogate management and placement procedures based on a cost function. For example, the cost function may be defined to select an SS with a low latency (e.g., the lowest among the candidate SSs). In another example, the cost function may be defined to select an SS with the largest residual bandwidth and/or a disk capacity from among the candidate SSs.

As shown FIG. 16, an FQDN request may be sent from the SR 702 to SM 704 at 1602. The FQDN request may include req_locality (e.g., a request to place the server in a particular geographic location or region, such as the United States or Europe), max_latency (e.g., a request for a maximum average latency from SS to potential clients in the region), and req_storage (e.g., a request for a minimum amount of storage required for the placement). The req_locality variable, max_latency variable, and req_storage variables indicate the FQDN origin server (e.g., SR 702) requirements for locality, maximum latency, and minimum storage of the SS. To serve the FQDN request, SM 704 evaluates each of the SSs in its database (or a subset of the SSs, or until it determines a suitable SSs) to determine a suitable SS to server the request. It is noted that SM 704 is subscribed to receive a server state, VMM statistics, and network statistics for each SS in its database.

In step 1618, SM 704 checks the server state of the SS under consideration. On a condition 1604 that the SS under consideration does not have a server state of PLACED, the SS is not selected. Otherwise, SM 704 checks the SS statistics of the SS under consideration in step 1620. On a condition 1606 that the SS statistics of the SS under consideration for cache and/or memory do not meet the requested storage indicated by the FQDN origin site, the SS is not selected. Otherwise, SM 704 checks the network statistics of the SS under consideration in step 1622, and calculates a latency of the SS, based on the network statistics and locality requested by the FQDN origin site, in step 1608. On a condition 1610 that the latency of the SS under consideration as a function of its locality exceeds the maximum latency requested by the FQDN origin site, the SS under consideration is not selected. Otherwise, SM 704 may select the SS under consideration as a surrogate for the FQDN origin site, or can compare the SS under consideration to other selected SSs to determine an SS to select as a surrogate for the FQDN origin site based on a cost function. After an SS has been selected as a surrogate for the FQDN origin site, it is activated in step 1616, and placed in step 1624.

It is noted that on a condition 1604, 1606, or 1610 that a particular SS is not selected, if any further SSs in the pool have not yet been evaluated, the process 1600 can return to condition 1604 to evaluate another unevaluated SS in the pool.

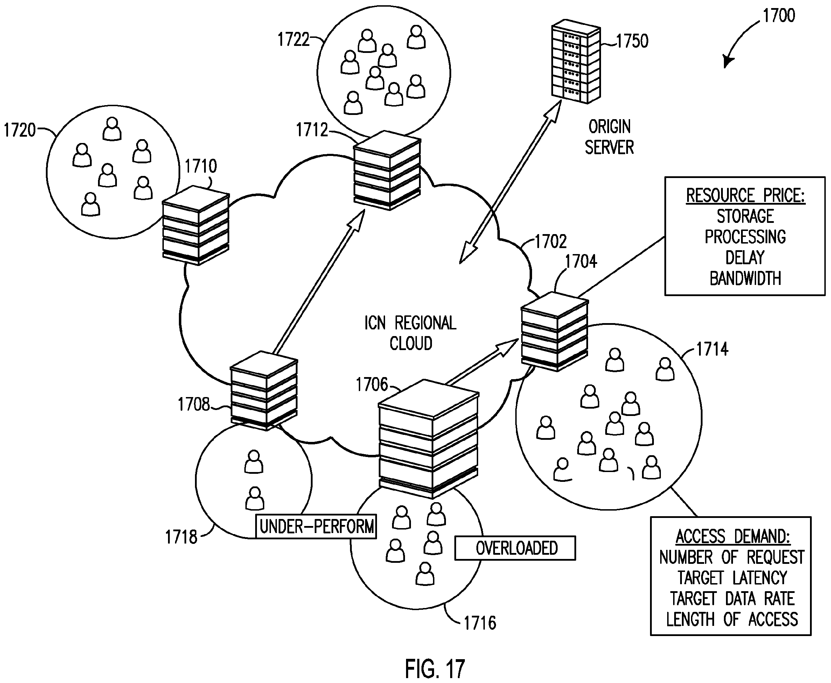

Price-demand-based server selection procedures can be implemented in order to manage SS endpoints. Such procedures may determine where to place the service endpoint in the network topology, and what services are to be placed, in a dynamic and adaptive manner. Such procedures can have the advantage of better regulating access traffic, improving user experiences and/or alleviating resource overload/network congestion. Such processes for migration and/or replacement can be based on published resource prices, which can have the advantage of improving service of access traffic demands based on the minimum network and/or resource cost. FIGS. 17-20 illustrate example price-demand based resource allocation and selection processes for a surrogate platform, using ICN pub/sub communications.

FIG. 17 is a system diagram illustrating an example ICN-based surrogate service infrastructure 1700. Infrastructure 1700 includes an ICN cloud 1702, and SSs 1704, 1706, 1708, 1710, and 1712. SSs 1704, 1706, 1708, 1710, and 1712 receive access demands 1714, 1716, 1718, 1720, and 1722 respectively. Origin server 1750 can request placement of its services on an SS, and the service can be placed, or moved, or re-placed) from one surrogate server to another via standard ICN pub/sub communication. For example, an SS may publish its resource price, and the SM may place the service on the destination server as well as publishing its availability to the network.

Resource price-based decision making processes may be applied to the resource allocation in this context (i.e., determining the best SS to host the resources of the origin server) and may have the advantage of helping to meet traffic demands, and/or improve the overall resource utilization, processing efficiency and power consumption of a surrogate system.

FIG. 17 illustrates an example of resource relocation in surrogate system 1700. The resources of available SSs 1704, 1706, 1708, 1710, and 1712 may be priced based on one or more criteria, which may include latency to users, available bandwidth, and storage/processing constraints, for example. The service placement with one of the available SSs 1704, 1706, 1708, 1710, and 1712 may be dynamic and adaptive to the real access demands from clients. The placed service may be made available and be delivered from the SS having the cheapest resource cost when demanded by access traffic. For example, the resource prices offered by SSs 1704, 1706, 1708, 1710, and 1712 may be determined by one or more parameters reflecting network dynamics and server status, and access traffic demands may be considered to be a bid for surrogate resources.

Turning to FIG. 17, the availability of SSs 1704, 1706, 1708, 1710, and 1712 may be published. For example, SSs 1704, 1706, 1708, 1710, and 1712 may each publish a resource price which may be determined as a combined function of storage, processing capability and bandwidth-delay product (i.e., latency multiplied by bandwidth between the SS and users). Access demands 1714, 1716, 1718, 1720, and 1722 may also be determined (e.g., based on a number of requests to the SS, target average latency to users, target data rate to users, and expected duration of access by users) and published. For example, each of SSs 1704, 1706, 1708, 1710, and 1712 may collect real-time traffic demand based on the number of service requests received from all demanding clients.

Services may be allocated from origin server 1750 to one of SSs 1704, 1706, 1708, 1710, and 1712 (e.g., by a SM), based on the published resources prices and the published access traffic demands. This allocation may be optimized based on one or more constraints within system 1700 to improve overall resource utilization. Service relocation amongst SSs 1704, 1706, 1708, 1710, and 1712 incurs cost however. Accordingly, the relocation cost, (e.g., added latency) may be taken into account in determining and/or utilizing the service resource price.

FIG. 18 is a table 1800 illustrating aspects of the resource allocation in FIG. 17. Table 1800 charts server resource prices 1805, 1810, 1815, 1820, 1825, 1830, 1835, 1840 versus access traffic demand 1855, 1860, 1865, 1870, 1875, 1880, 1885, 1890 respectively. Resource prices 1805, 1810, 1815, 1820, and 1825 may correspond to resource prices of SSs 1704, 1706, 1708, 1710, and 1712 respectively, and access traffic demand 1855, 1860, 1865, 1870, and 1875 may correspond to access demands 1714, 1716, 1718, 1720, and 1722 respectively, for example. The access traffic demand (AD) from all clients served by one of SSs 1704, 1706, 1708, 1710, and 1712 can be described as a function of the following parameters: total number of requests in a unit time; target QoS parameters (e.g. latency, data rate); and total length of service access in a unit time.

In one example, a resource price $RP(sid)$ of a surrogate server, that can be identified by a unique surrogate id (sid), can be formulated as:

$$RP(sid)$$
$$= \frac{AverageDelaytoClient(sid) \times RelocationCost(sid)}{RemainingStorage(sid) \times RemainingProcessing(sid) \times InstantBandwidth(sid)}$$

A normalized resource price $\widehat{RP}(sid)$ to determine the best prices available in all servers can be formulated as:

$$\widehat{RP}(sid) = \frac{RP(sid) - RP^{min}}{RP^{max} - RP^{min}}$$

where

$$RP^{max} = \max_{sid=1-n} \{RP(sid)\}$$

$$RP^{min} = \min_{sid=1-n} \{RP(sid)\}$$

(Where $n$ = the total number of SSs in service infrastructure 1700)

Here, a higher $\widehat{RP}(sid)$ indicates that the resource in the server is more expensive than in other servers, and that the server may therefore be a poor candidate for service relocation at the time corresponding to the calculated $\widehat{RP}(sid)$. The system (e.g., SM 794) may determine the best priced resource, e.g., based on measurements such as average delay to potential access clients; remaining storage/processing of the destination server; instant bandwidth, (e.g., instantaneous available bandwidth for receiving the service relocation and serving the clients); and/or relocation cost to the destination server (e.g., measured by latency).

In one example, the relocation cost may take into account the required storage/compute capability against the server remaining memory/processing capability to support an example service relocation. Based on all the bids placed from access clients, once the best lower price resource is found, the surrogate destination ID may be assigned to the best price resource and the requested service may be migrated to or replaced in the destination server. It is noted that specific algorithm for matching the demand bid and resource price can be configured, and the method for monitoring of network and server status may be application specific.

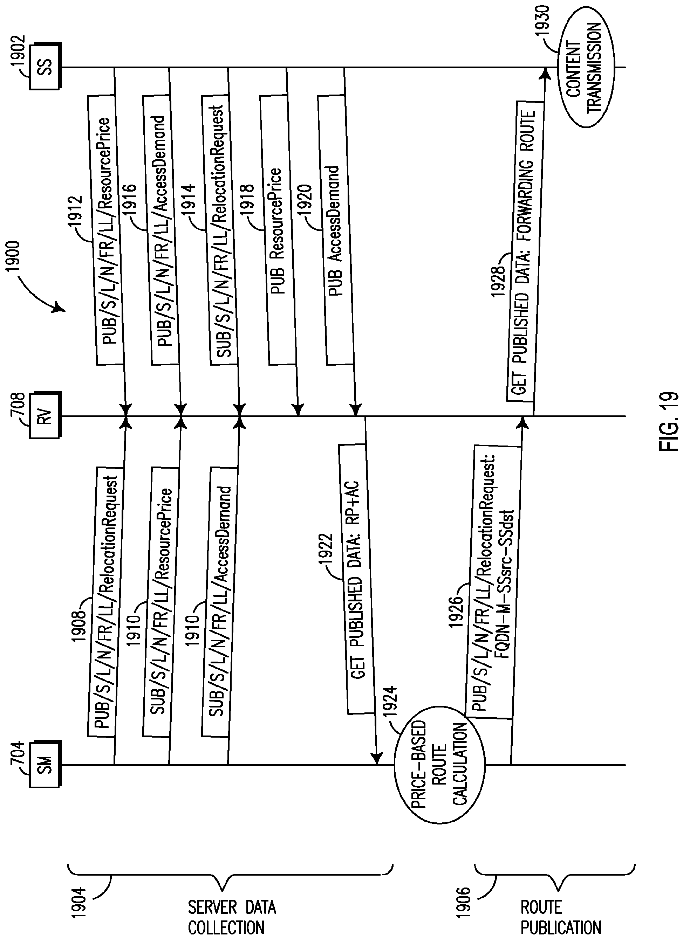

FIG. 19 is a message sequence diagram illustrating an example message sequence 1900 among SM 704, RV 708, and an SS 1902, and describing a price-demand based algorithm via a representative pub/sub semantic. FIG. 19 illustrates the example sequence in two phases: a) server data collection 1904, and b) route publication 1906.

In the server data collection phase 1904, SM 704 may publish a relocation request by sending a message 1908 to RV 708. The relocation request can be expressed as Pub /S/L/N/FR/LL/RelocationRequest. SM 704 can also subscribe to resource prices of publishing SSs by sending a message 1910 to RV 708. The resource prices subscription can be expressed as Sub /S/L/N/FR/LL/ResourcePrice. a relocation request by sending a message 1908 to RV 708.

SS 1902 may publish its resource price by sending a message 1912 to RV 708. The resource price publication can be expressed as Pub /S/L/N/FR/LL/ResourcePrice. SS 1902 may subscribe to receive relocation requests by sending a message 1914 to RV 708. The relocation request subscription can be expressed as Sub /S/L/N/FR/LL/Relocation Request. It is noted that each SS may publish its own resource price: (e.g., pub:RP1=5; pub:RP2=8; etc., where RP1=5 indicates that a resource price for an SS having server identification 1 is 5, etc.)

Each SS may collect and publish its access demand (e.g., pub:AD1=6; pub:AD2=4; etc., where AD1=6 indicates that an access demand for the SS having server identification 1 is 6, etc.) For example, SS 1902, after determining access demand statistics for itself, can publish its access demand by sending a message 1916 to FR 708. This access demand publication can be expressed as Pub /S/L/N/FR/LL/AccessDemand. RV 708 may match the publications and subscriptions, and can notify SM 704 (which is subscribed to receive resource prices) of all resource prices reported by SSs (including SS 1902).

It is noted that SSs can be configured to report resource price and access demand periodically so that the most updated resource prices of all servers are made available at the SM. For example, SS 1902 can publish updated resource price and access demand information by sending messages 1918 and 1920 to RV 708, and SM 702 can received the published updated resource price and access demand information from RV 708 in message 1922.

After collecting surrogate server data in the server data collection phase 1904, the SM can begin the route publication phase 1906 by calculating a relocation route in step 1924. The relocation route is a forwarding route from a source SS, which is currently hosting the FQDN (i.e., data for the origin site, e.g., SR 702) to a destination SS. SM 704 may derive a relocation route in the format of, e.g., RelocationRequest: FQDN-M-Data-SSdst (i.e. migrate FDQN from SSsrc to SSdst) and publish this relocation request. The SM 704 may derive the relocation route based on an objective function (e.g., based on a function of the published resource prices and access demands for the SSs.)

RV 708 may match the publications and subscriptions, and may publish a forwarding route from the source SS, (SSsrc, which is SS 1902 in this example) to a destination SS (SSdst) by sending a message 1926 to RV 708. The forwarding route publication can be expressed as Pub /S/L/N/FR/LL/RelocationRequest:FQDN-M-SSsrc-SSdst. Here, the notation FQDN-M-SSsrc-SSdst indicates that the FQDN should be migrated from SSsrc to SSdst. SS 1902 (which subscribed to receive relocation requests in message 1914) can receive the forwarding route from RV 708 in message 1928.

After receiving the forwarding route, SS 1902 may initiate the content transmission to the new destination SS in action 1930. After the content transmission is completed, the source SS 1902 may delete the FQDN content from its storage, which may be released for other uses, depending on whether it is a migration or replacement operation. In this context, a migration operation moves the FQDN content to a destination server without retaining a copy in the source server, whereas a replacement operation moves the FQDN content to a destination server while retaining a copy in the source server. All later access requests to the origin server may be served via the new destination SS.

Each of the management commands (e.g., PLACE, DISPLACE, WAKEUP, SHUTDOWN, CONNECT, DISCONNECT, UPDATE) can be transmitted from an SA to a VMM and correspond to an operation with appropriate parameters. The operation can be mapped to a protocol data unit (PDU). The type of PDU can correspond to the operation name. The structure of the PDU may include a type of the message (i.e., whether it is a request or a reply, an identifier of the message, an address of the message recipient, and/or arguments for the operation.

The PLACE command can be used to cause an SS to enter the PLACED server state from the NONPLACED state. An SS in the PLACED server state is identified in a database of the SM, and a VM image is available for a targeted FQDN at the SS. An SM may send the PLACE command with a list of arguments, e.g., PLACE (Handle, Compute, Store, Network), with each argument representing a data structure that contains further information about that category. The Compute, Store, and Network data structures may encapsulate various parameters as shown in Table 1. The Handle data structure may encapsulate a service end-point description.

Having received the PLACE command, VMM may wake up the requested configuration of the VM along with the data associated with the surrogate service The VMM may then instruct the VM to enter the PLACED state. The way in which information regarding the VM and surrogate service is received from the VMM via the Handle may be implementation-specific. The VMM may then send a response back to the SA along with the Handle, indicating that the SS has entered the PLACED state. If the VMM is unable to accede to the request Handle (e.g., because it is not in the NONPLACED state), the VMM may send back an error code to the SA and may remain in its current state. The Handle in this context is an internal module in the VMM to receive commands from the SA and to translate the commands to specific instructions to VMs.

The WAKEUP command may be used to cause an SS to enter the WOKEN state from the PLACED state. An SS in the WOKEN server state is identified in a database of the SM, with a VM image available for a targeted FQDN at the SS, and the VM that hosts the VM image is booted and/or ready to be connected.

For example, the SM may send a WAKEUP command to a VMM with an argument (Handle). If the VMM is in PLACED state, the VMM may wake up the VM instance, move itself into the WOKEN state and send a WOKEN response back to the SA. If the VMM is unable to accede to the request (e.g., because it is not in the PLACED state), it sends back an error code to the SA and remains in its current state.

The CONNECT command may be used to cause an SS to enter the CONNECTED state from the WOKEN state. An SS in the CONNECTED server state is connected to the FQDN-based registration interface of the NAP.

For example, the SA may send the CONNECT command with an appropriate Handle as a parameter. This Handle parameter may include a data structure that encapsulates a service end-point description. If the VMM receives the CONNECT command, and if the VMM is in the WOKEN state, the VMM may send a 'register Handle' request to the NAP and may enter the CONNECTED state. On the other hand, if the VMM cannot confirm that the NAP has registered the Handle (e.g., because it is not in WOKEN state, or the NAP is not responding), the VMM may send back an error code to the SA indicating that the CONNECT command could not be carried out, and may remain in its current state.

The DISCONNECT command may be used to cause an SS to enter the WOKEN state from the CONNECTED state, and the SS may be disconnected from the FQDN-based registration interface of the NAP with the DISCONNECT command. For example, the SA may send a DISCONNECT command to the VMM with an appropriate Handle. If the VMM is in the CONNECTED state, the VMM may send a 'de-register Handle' request to the NAP and may enter the WOKEN state. If the VMM cannot confirm that the NAP has de-registered the Handle "Handle" (e.g., because it's not in CONNECTED state, or the NAP is not responding), the VMM may sends back an error code to the SA indicating that the DISCONNECT command could not be carried out, and may remain in its current state.

The operation of the surrogate server may be suspended with the SHUTDOWN command. For example, the SA may send a SHUTDOWN command to the VMM along with the Handle. If the VMM is in the WOKEN state, it may perform any necessary housekeeping (which may be implementation-specific) and may enter the PLACED state. If the VMM is unable to execute the SHUTDOWN command (e.g., because it's not in the WOKEN state), the VMM may send back an error code and may remain in its current state.

The surrogate server may be displaced with the DISPLACE command. For example, the SA may send a DISPLACE command to the VMM along with the Handle. If the VMM is in the PLACED state, it may perform any necessary housekeeping (which may be implementation-specific) and may enter the NONPLACED state. If the VMM is unable to execute the NONPLACED command (e.g., because it is not in the NONPLACED state), the VMM may send back an error code and may remain in its current state.

The surrogate server may be updated with the UPDATE command. For example, the SA may send an UPDATE command to the VMM along with the Handle. If the VMM is in one of several states appropriate to the UPDATE command (e.g., three states, PLACED, WOKEN or CONNECTED), it may perform any necessary internal processes which may be implementation-specific) and may remain in the same state as it was when it received the UPDATE command. If the VMM is unable to execute the UPDATE command (e.g., because it is not in one of the three aforementioned states), the VMM may send back an error code and may remain in its current state.

One example message structure for the PDU used in the SA-VMM interface can be illustrated by an example PDU of the request 'PLACE' shown in Table 3 below. Other commands may have a similar structure:

TABLE 3: Example message structure for the PDU of the VMM-SA interface.

| Type of message: Request | RequestIdentifier: 1 | Reference: IP address | Command: PLACE | Parameters: Handle, Compute, Store, Network |
|---|---|---|---|---|

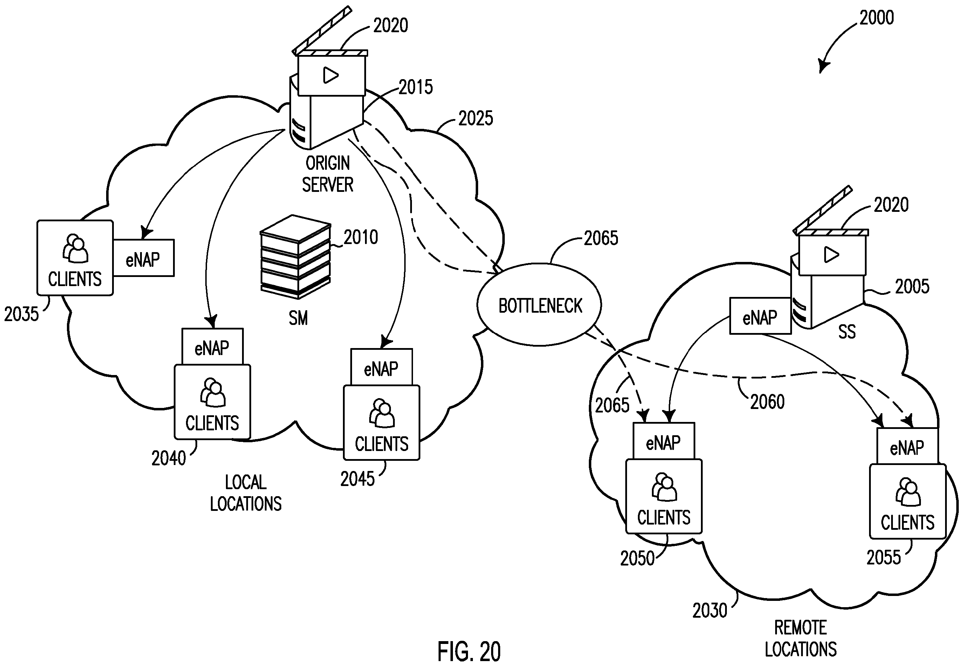

FIG. 20 is a system diagram illustrating an example use case for an example surrogate architecture 2000. An available surrogate server (SS) 2005 may be registered with an SM 2010 with a preset status of NONPLACED. This status may be preset based on an estimate of local popularity. Video content 2020 may be placed from an origin server 2015 to one or more selected surrogate servers, including surrogate server 2005.

Clients 2035, 2040, and 2045, which are located within local area 2025 may download or stream video content from the origin server 2015 with a pre-agreed quality of service (QoS) level. From time to time, clients 2050 and 2055, which are attached to remote local area 2030, may try to download or stream the same video from the origin server 2015. Clients 2050 and 2055 have a longer distance connection 2060 to origin server 2015 than clients 2035, 2040, and 2045, and may therefore experience a performance bottleneck 2065. Bottleneck 2065 may cause slower response times and lower perceived video quality.

In surrogate architecture 2000, the network (e.g., a monitoring device) monitors network statistics regarding architecture 2000. The measured network statistics may include response time, latency, and/or bandwidth available to a remote client. The network may report the network statistics to SM 2010, and may also report server statistics measured from one or more SSs (including SS 2005) to SM 2010.

If network and/or server conditions are met, such as if a client accesses the video with a long response time (e.g., a longer response time than a nearby surrogate server provides), the SM may inform a topology manager (TM) to redirect service paths from the origin server 2015 to one or more SS (e.g., to a SS closer to the client and/or having less latency with the client). Switching from origin server 2015 to an SS, such as SS 2005, or switching amongst surrogate servers, may be handled in a manner that is transparent to clients. Thus, client users may continue watching the video 2020 via the same FQDN during the switching process, for example. Upon receiving a switching decision, the selected SS (SS 2005 in this example) may be WOKEN, ACTIVATED and CONNECTED to the IP network. The SS 2005 may be DISCONNECTED and SHUTDOWN, for example, if the network predicts (e.g., based on the network and/or server statistics) that no more clients will benefit from a redirected service path to SS 2005. Surrogate registration/de-registration may typically be performed based on mid-long term popularity estimations, and typically would be de-registered only if clients attached to it are not likely to use the content frequently in the foreseeable future.

System parameters may be analogized to "tuning knobs" for fine-tuning the system performance of the surrogate platform (e.g., based on specific application requirements). The system parameters may include the network measurement thresholds for switching between origin servers and surrogate servers and/or popularity metrics for determining whether a registration or de-registration action is to be executed in SM.

Various system architectures, components, interfaces and procedures for surrogate server (SS) selection and placement in surrogate platform may be used to select the best serving SS at the service architecture level from among a number of available SSs. In some implementations, selection of the serving SS may be performed purely by a topology manager (TM) based on, for example, a shortest path rule at the network level. Given the lack of content request information typically available at the TM however, this type of surrogate selection process may be performed without knowledge of any service level requirements from the original content request. This may result in a poor or sub-optimal choice of surrogate management platform. For example, the server having the shortest path to client may not always be the best server in view of service level requirements, (e.g., network statistics, server workload, access demands, etc.).

Accordingly, it may be desired for a surrogate management network to place content from origin sites into distributed surrogate servers, taking into consideration network traffic statistics, server capacity constraints and/or content access requests from clients. Selection of the best serving surrogate server may be made using such information, such that service level requirement may be met in an effective and variable way. These advantages may be a driver in positioning a surrogate content distribution platform as a tangible traffic localization solution for industry deployment.

Rather than using general forwarding rules at network level, a multi-criteria decision making model can be defined at a SM, (rather than at the TM) at the service level, to select the best serving surrogate server taking into consideration network statistics, server workload as well as access demands from clients. In some implementations, content may be delivered to a client initially via a temporary available surrogate server which is sub-optimal, while a better surrogate server is activated based on the access request. The data transmission may be redirected to a new path to the newly activated server when it is connected and available for service without interruption on the client side.

Such approaches may have the advantage of improving the performance of the bandwidth-hungry applications over existing surrogate platforms by, for example, reducing the surrogate server load, alleviating network congestion, allowing for better traffic localization, improving user experience, and/or optimizing server storage and processing.

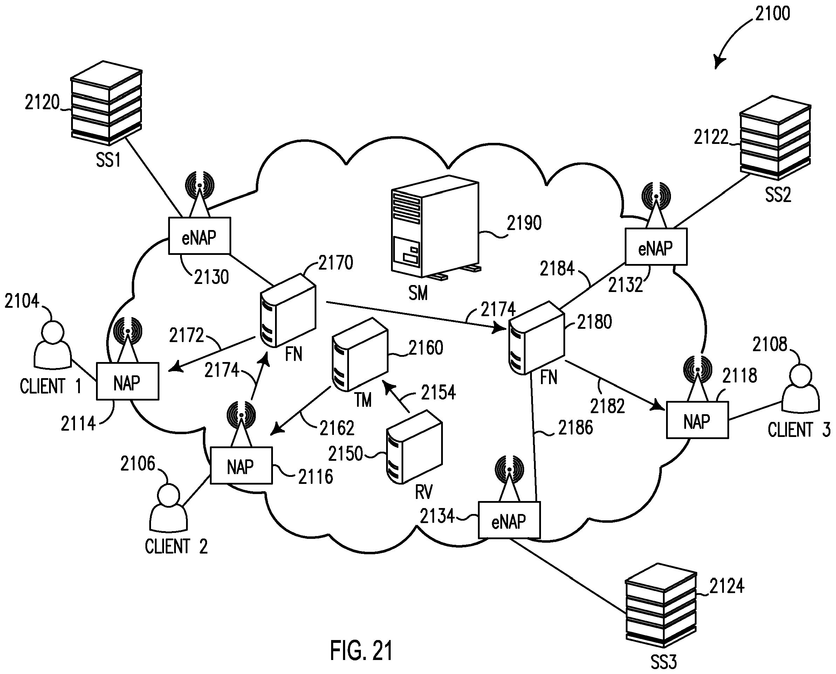

FIG. 21 is a system diagram which illustrates an example surrogate system architecture 2100, and various operational procedures. Architecture 2100 is a baseline information centric networking (ICN) architecture with which various systems, methods, and devices (e.g., as discussed herein) may be implemented, showing certain components and their interactions. The various components described with respect to FIG. 21 may be implemented using part or all of the communication system 100 as shown and described with respect to FIGS 1A-E. In this example, an extended network attachment point (eNAP) can host a standard network attachment point (NAP) and a surrogate agent (SA), and can provide communication between a surrogate management platform and an ICN network. Each of these components may comprise a suitable computer communications device, such as a server or other network appliance. Surrogate system architecture 2100 may for example be implemented as or within other networks 112 as shown in FIG. 1C-E, or any other suitable computer communications network such as the internet or a subset thereof.

In surrogate system architecture 2100, ICN NAP 2116, on behalf of the attached publisher, client 2106, may invoke a publication interface for a publication request 2152 of a fully qualified domain name (FQDN) towards the rendezvous (RV) 2150. RV 2150 may determine a successful publish/subscribe (pub/sub) match of publication request 2152 with a subscriber (i.e., a possible surrogate server hosting the service behind this FQDN) and can send a resource coordination request 2154 to the TM 2160. In this example, RV 2150 selects SS 2120 as a matching subscriber.

TM 2160 may facilitate formation of a suitable communication path between given publisher(s) and subscriber(s). If the TM 2160 receives topology formation notification from the RV 2150, it may select appropriate network resources (e.g., route information in the network topology) to be used to form the communication path, e.g., according to an optimization objective of the routing algorithm in operation, such as a shortest path rule. For example, TM 2160 can select SS 2120 to host the service, which can be reached via a path from the publisher (Client 2106) via NAP 2116, link 2174, FN 2170, link 2176, and eNAP 2130.

In this case, the TM 2160 may create a Forwarding Identifier (FId), which it may provide to the publisher (client 2106 via NAP 2116) in a message 2162 in order to specify the source route for the data packets. After the TM 2160 coordinates these resources, appropriate forwarding information for forwarding the data traffic (e.g., a LIPSIN Bloom filter) may be sent from the TM 2160 back to the publisher (client 2106 via NAP 2116) in message 2162. The publisher may utilize this forwarding information to send the to-be-published information from the publisher to the eNAP 2130 that subscribed to it on behalf of the IP-based client, SS 2120. Thereafter, the content may be delivered to a client via forwarding nodes (FN) through an appropriate forwarding table configuration.

For example, client 2104 may subscribe to and receive the content hosted on SS 2120 via eNAP 2130, link 2176, FN 2170, link 2172, and NAP 2114. Client 2108 may subscribe to and receive the content hosted on SS 2120 via eNAP 2130, link 2176, fn 2170, link 2174, FN 2180, link 2182, and NAP 2118. It is noted however that SS 2120 may not conform to the shortest path rule for client 2108. In this case, RV 2150 determines a different pub/sub match of publication request 2153 with a different possible surrogate server. For example, RV 2150 may match SS 2122, which can be reached via a shorter path from eNAP 2132, link 2184, FN 2180, link 2182, and NAP 2118, or SS 2124, which can be reached via a shorter path from eNAP 2134, link 2186, FN 2180, link 2182, and NAP 2118. In the example surrogate system architecture 2100, the selection from among potentially more than one surrogate server 2120, 2122, 2124 (as subscribers subscribed to the FQDN) may be performed purely by the TM 2160 where the path is computed.

SM 2190 is not involved in this process in system 2100, and may be omitted. Instead, system 2100 implements a dedicated path computation element (PCE) component in the form of the RV and TM operations described above and realizes a simple forwarding operation based on path information and protocol translation at the eNAPs.

Example implementations in link-based environments may include various forwarding mechanisms, such as line-speed publish/subscribe internetworking (LIPSIN), multi-stage Bloom filters (MSBF) or Bloom filter switching, which may be used to represent a suitable communication relationship.

Various systems, methods, and/or devices discussed herein may be implemented based on the baseline ICN semantic and communication logic as discussed with respect to FIG. 21, with a surrogate management system building on the baseline architecture, and where a number of surrogate servers (SSs) are attached each via an extended NAP (eNAP), and a surrogate manager (SM) is responsible for managing the surrogate system.

One possible limitation of the system described with respect to FIG. 21 is that TM 2160 may select a serving SS without interacting with SM 2190. This may lead to sub-optimal performance, as the SM 2190 may have further information regarding the status of the surrogate network and servers, at the service level, in terms of the capability of SSs, as well as the information regarding access demand load on each SS from clients.

Accordingly, it may be desired to base a surrogate service architecture on the background system architecture described with respect to FIG. 21, which includes systems, methods, and/or devices configured to select a serving SS (e.g., an optimal or best surrogate server) by utilizing the knowledge at the SM 2190 at the surrogate service level, rather than a traditional path calculation-based selection at TM 2160.

It may also be desired to include techniques for selecting a sub-optimal temporary S, initiating content placement, and switching to a more optimal surrogate server, (e.g., close to the community network from which the new user requests are issued) when the more optimal SS becomes available.

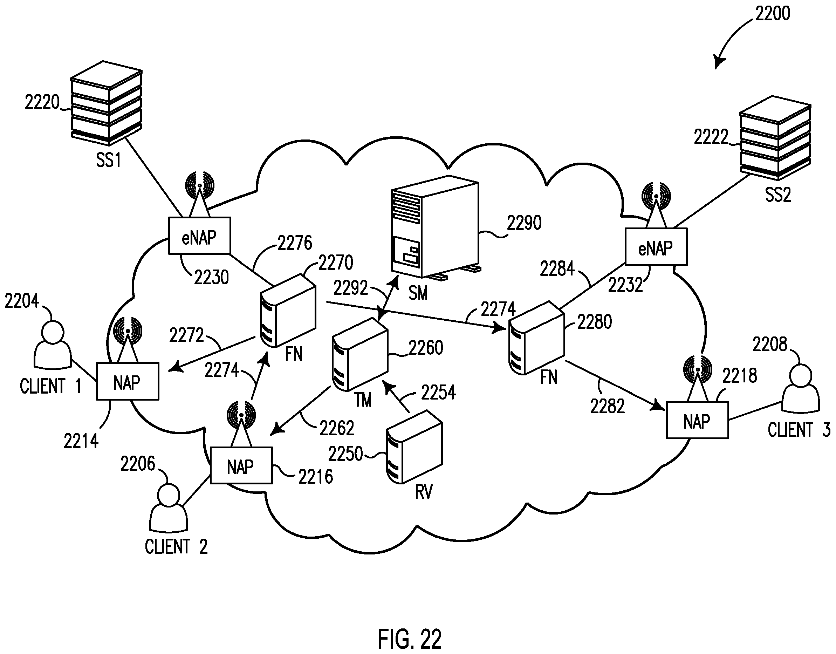

FIG. 22 is a system diagram illustrating an example system 2200 which configured for SM-based SS selection; i.e., decision making for surrogate selection in system 2200 is made in the SM 2290, and may be delivered to the TM 2260 in order to construct a delivering path from the best surrogate servers to clients. The example shown in FIG. 22 is an extension to the basic ICN solution shown and described with respect to FIG. 21. The various components described with respect to FIG. 22 may also be implemented using part or all of the communication system 100 as shown and described with respect to FIGS 1A-C. Each of these components may comprise a suitable computer communications device, such as a server or other network appliance.

System 2200 may for example be implemented as or within other networks 112 as shown in FIG. 1C-E, or any other suitable computer communications network such as the internet or a subset thereof. In system 2200, ICN NAP 2216, on behalf of the attached publisher, client 2206, may invoke a publication interface for a publication request 2252 of a FQDN toward the RV 2250. RV 2250 may determine a successful pub/sub match of publication request 2252 with a subscriber (i.e., a possible SS hosting the service behind the FQDN).

If a pub/sub match occurs at RV 2250, RV 2250 may transmit a topology formation request in a message 2254 to TM 2260. If TM 2260 receives a topology formation request from the RV 2250, the TM 2260 may forward the request to the SM 2290 over interface 2292 for selection of appropriate surrogate server resources according to an optimization objective implemented at the SM.

SM 2290 may select an SS based on network statistics, server constraints, access demand, and/or other suitable metrics, for example. Accordingly, clients may be served directly by the best SS as determined by the SM, and may accordingly be more likely to enjoy better performance whilst balancing network load.

Various methods and algorithms for selecting the surrogate servers may be based on the content request with multiple criteria, which may include for example network traffic statistics, server capacity constraints and/or as access demands from clients. An example decision making algorithm for selecting the best SS may be based on one or more criteria, such as network traffic statistics, server constraints, access demands, and/or network topology/load.

Network traffic statistics may be dynamically measured from different physical machines (e.g., any servers) in the network and reported periodically to the SM 2290. Server constraints, which may include server statistics and/or server status of, may be measured at all registered surrogates (SS 2220 and 2222 in this example) and may be reported, e.g., periodically, to SM 2290. The server statistics constraints may include remaining storage available for placing content and/or the processing capability required for content transmission. The server status information may include the status of the server as, for example, NONPLACED, PLACED, WOKEN, or CONNNECTED. Other suitable status indications may be used instead of or in addition to these examples.

Access demands on SS 2220 and 2222 from clients may be obtained, e.g., via mid-long term estimations derived from historical network traffic. Network topology (e.g., with associated network load) may also be considered as one of the decision metrics, and this information may be made available to the SM 2290 from the TM 2260. An example flow sequence for operational procedures is described later herein.

After SM 2290 selects an SS, it can inform TM 2260 of the selection over interface 2292. After receiving the SS selection from SM 2290, TM 2260 may facilitate formation of a suitable communication path between given publisher(s) and subscriber(s). For example, TM 2260 may select appropriate network resources to be used to form the communication path, e.g., according to an optimization objective of the routing algorithm in operation, such as a shortest path rule. For example, if SM 2290 selected SS 2220 as the best SS to host the service, TM 2260 can determine form a communication path from the publisher (Client 2206) via NAP 2216, link 2274, FN 2270, link 2276, and eNAP 2230.

In this case, the TM 2160 may create a Forwarding Identifier (FId), which it may provide to the publisher (client 2106 via NAP 2116) in a message 2262 in order to specify the source route for the packets. After the TM 2260 coordinates these resources, appropriate forwarding information (e.g., a LIPSIN Bloom filter) may be sent from the TM 2260 back to the publisher (client 2206 via NAP 2216) in message 2262. The publisher may utilize this forwarding information to send the to-be-published information from the publisher to the eNAP 2230 that subscribed to it on behalf of the IP-based client, SS 2220. Thereafter, the content may be delivered to a client via forwarding nodes (FN) through an appropriate forwarding table configuration.

For example, client 2204 may subscribe to and receive the content hosted on SS 2220 via eNAP 2230, link 2276, FN 2270, link 2272, and NAP 2214. Client 2208 may subscribe to and receive the content hosted on SS 2220 via eNAP 2230, link 2276, fn 2270, link 2274, FN 2280, link 2282, and NAP 2218. It is noted however that SS 2220 may not conform to the shortest path rule for client 2208. In this case, SM 2290 may determine a different pub/sub match of publication request 2253 with a different possible surrogate server. For example, SM 2290 may match SS 2222, which can be reached via a shorter path from eNAP 2232, link 2284, FN 2280, link 2282, and NAP 2218. In the example surrogate system architecture 2200, the selection from among potentially more than one surrogate server 2220, 2222 (as subscribers subscribed to the FQDN) may be performed by SM 2290, and the selection may be transmitted to the TM 2260 where the path is computed.

Server placement and activation for improving optimality is further discussed herein. With the various systems, devices, and methods discussed with respect to FIG. 22 a situation may occur where the selection of the surrogate server, based on currently available instances, is not optimal with respect to the requesting client. A sub-optimal temporary surrogate server selection procedure may be used in this case, which may be based on the procedures described with respect to FIG. 22, and the placement and activation of an optimal (or closer to optimal) surrogate server close to the community network from where the new user requests were issued may be initiated.

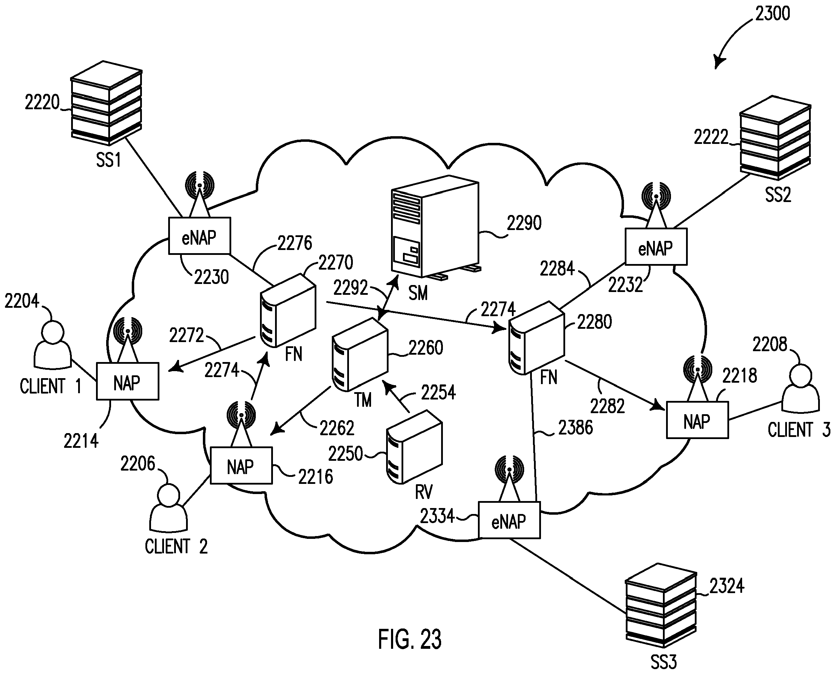

FIG. 23 is a system diagram illustrating example system 2200, as shown and described with respect to FIG. 22, but with additional components. The arrangement of FIG. 23 illustrates example surrogate placement and activation for improving optimality. The various components described with respect to FIG. 23 may be implemented using part or all of the communication system 100 as shown and described with respect to FIGS 1A-C. Each of these components may comprise a suitable computer communications device, such as a server or other network appliance. The system shown with respect to FIG. 23 may for example be implemented as or within other networks 112 as shown in FIG. 1C-E, or any other suitable computer communications network such as the internet or a subset thereof.

In the arrangement of FIG. 23, if a client's request is received at the SM 2290, the SM 2290 checks its database. In this example, the SM finds 3 alternative SSs, i.e., SS 2220, SS 2222, and SS 2324, where SS 2220 and SS 2222, are active and ready to server but with sub-optimal performance. SS 2324 is calculated by SM 2290 as the optimal surrogate server, but SS 2324 is inactive. SM 2290 may thus first assign the best available (i.e., active) SS, which is SS 2220, as the temporary serving server, and can transmit the selection of SS 2220 to TM 2260 as in the example of FIG. 22. In the example of FIG. 23 however, SM 2290 has determined that SS 2324 as the optimal SS when active. Accordingly, the SM 2290 may initiate the placement and connection of SS 2324. After the placement and connection of the SS 2324 is completed, since the SS 2324 is now considered a new subscriber, TM 2260 may inform NAP 2216 to flush the local forwarding state at the client 2206. The next request from a client for service of the content from publishing client 2206 may thus provoke the NAP 2216 / RV 2250 / TM 2260 / SM 2290 logic loop again, during which the SM 2290 will assign SS 2324 as the new serving server to the requesting client.

Switching from SS 2222 to SS 2324 is thus automated and transparent to user. From the user's perspective, a lower quality of content may be experienced for a short period of time at the beginning of a session, while waiting for the new SS to place. A maximum possible quality may be delivered once the new SS is placed. A detailed flow sequence for these operational procedures is described later herein.

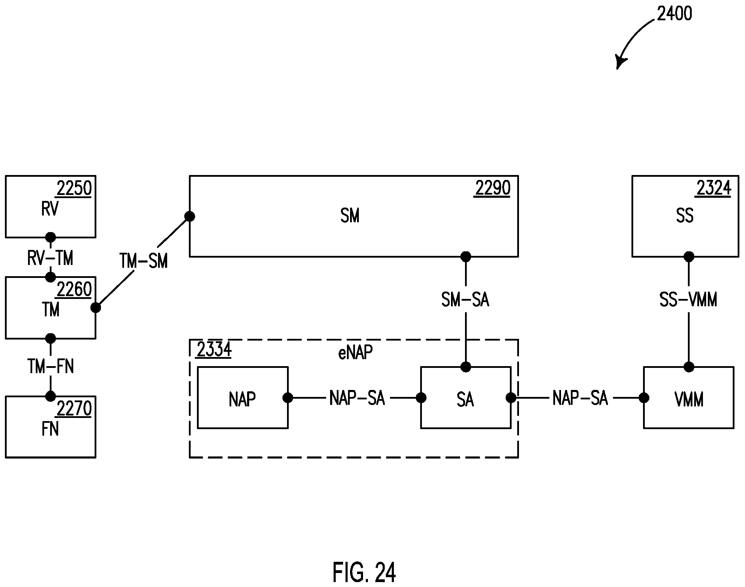

FIG. 24 is a block diagram illustrating example interfaces and communications relating to optimal content placement for surrogate management, as described with respect to FIGS. 22 and 23.

SM 2290 may receive a new surrogate placement request for a specific FQDN through the TM-SM interface, which may include the target servers and network parameter threshold. Examples of such request data may include attribute-value descriptions or XML-based descriptions. Based on this request data, the SM 2290 may consider one or more criteria, such as network statics as published by the surrogate servers in terms of data rate, latency and loss rate; the server constraints reporting the status of all available surrogate servers, in terms of storage, processing capability and etc.; the access demands from the local area network from which the request is sent; and/or the network graph of the available surrogate servers from TM 2260 via the TM-SM interface.

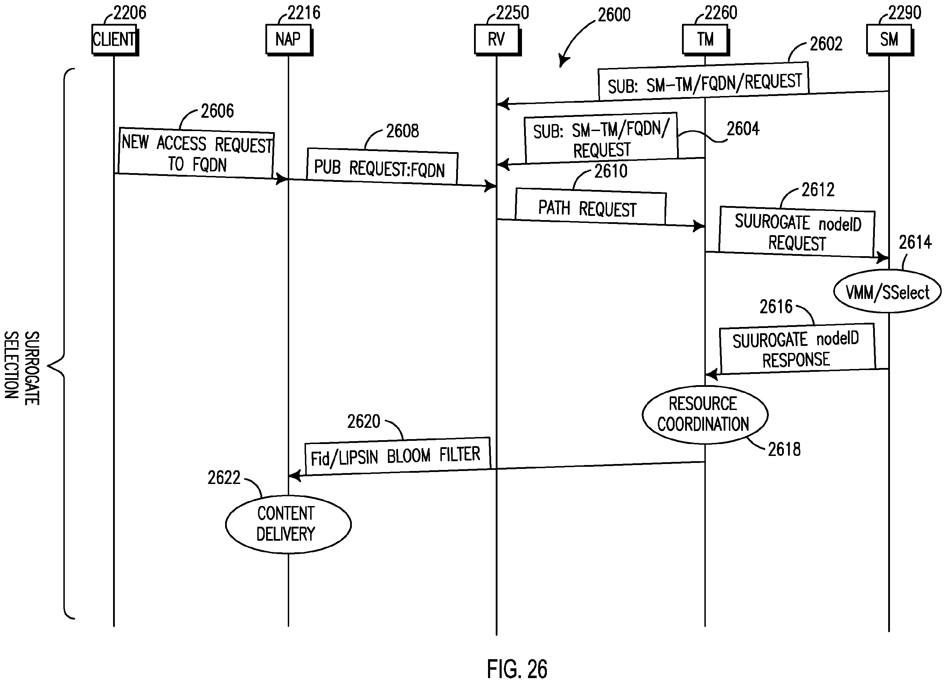

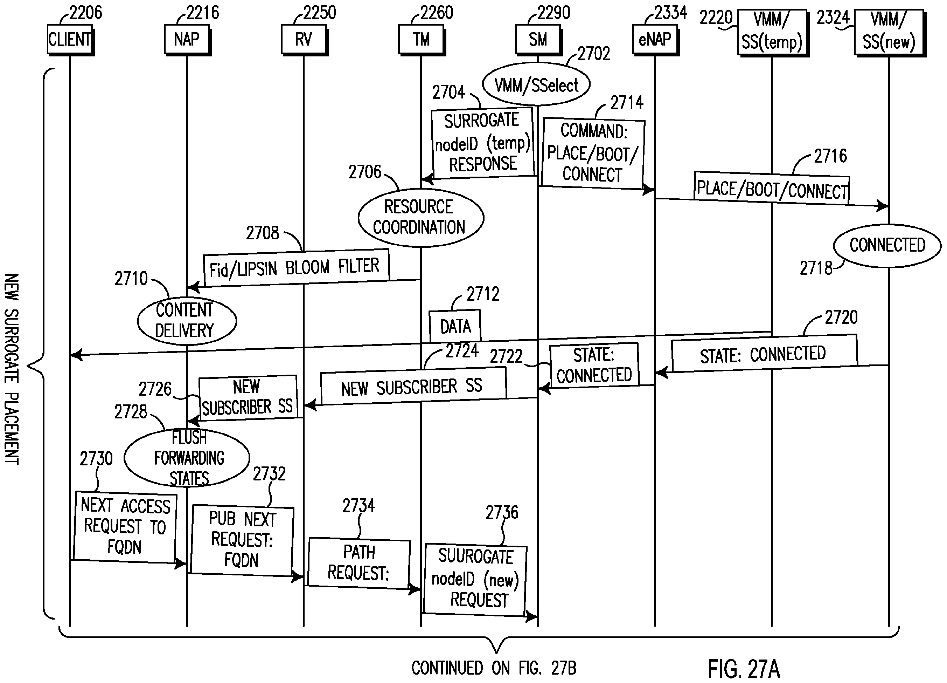

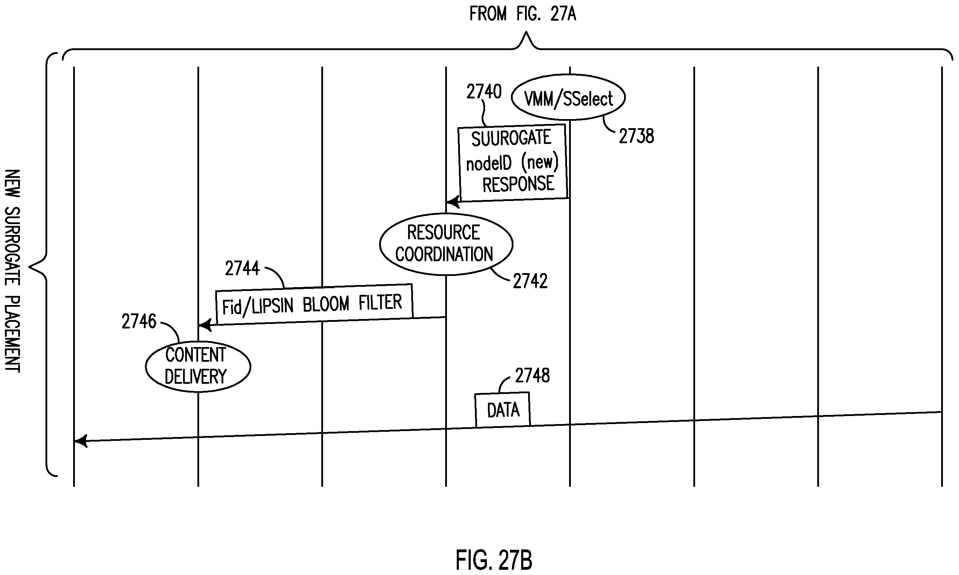

The SM 2290 may thereafter determine the best possible surrogate server or servers. As discussed regarding FIG. 23, the SM may select the best currently available surrogate server. Example messaging involved in this case is illustrated with respect to FIG. 26. The SM may also place other available, yet not connected, surrogate resources into the CONNECTED state if those resources would provide better surrogate capabilities to the request. Example messaging involved in this case is illustrated with respect to FIGS. 27A and 27B.

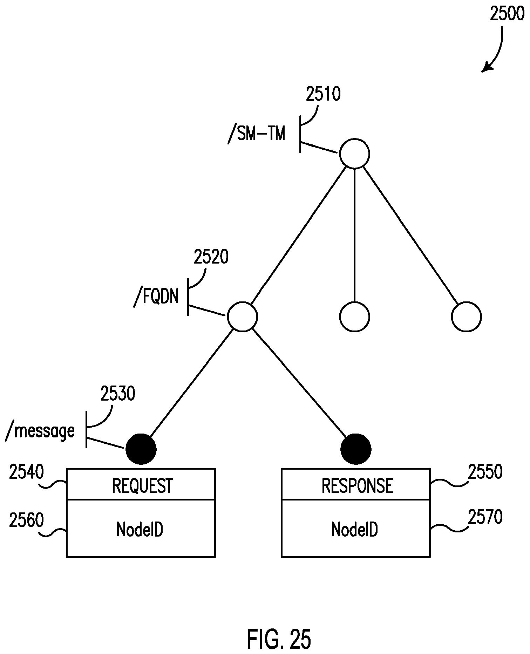

The surrogate selection process may therefore be fulfilled by the SM rather than the TM. To facilitate this, messages be exchanged between TM 2260 and SM 2290, with the TM-SM interface being responsible for the communications via a simple dedicated ICN namespace, e.g., as described with respect to FIG. 25.

FIG. 24 also illustrates various other interfaces between components of system 2200. RV 2250 can communicate with TM 2260 over the RV-TM interface. FN 2270 can communicate with TM 2260 over the TM-FN interface. SM 2290 can communicate with an eNAP, such as eNAP 2334, via an SM-SA interface with the SA of eNAP 2334. The SA of eNAP 2334 can communicate with the NAP of eNAP 2334 via the NAP-SA interface, and can communicate with a VMM via the SA-VMM interface. The VMM communicates with SS 2324 via the SS-VMM interface. It is noted that the VMM can be implemented on any suitable node in an IP portion of system 2200, including nodes not shown in FIGS. 21, 22, or 23, for example.

FIG. 25 illustrates an example new namespace 2500 for TM-SM communication. To facilitate communication between the SM 2290 and TM 2260 via an ICN pub/sub semantic, a new simple namespace may be defined under a /SM-TM root scope 2510 with /FQDN sub-scope 2520, /message sub-scope 2530 including a request sub-scope 2540 and response subscope 2550. Corresponding messages can be expressed, for example, as SM-TM/FQDN/Request, SM-TM/FQDN/Response. Under each FQDN, the request sub-scope 2540 may specify the nodeID 2560 of the current SSs as provided by the TM, and response subscope 2550 may specify the nodeID 2570 in which the SM places the chosen SS. To illustrate this example, it may be assumed that SM subscribed to this request scope from the beginning and that the TM publishes the new request data under this scope, i.e. the nodeID of the current SSs provided by the TM. It may further be assumed that the TM subscribed to the response from the beginning and the SM will publish the response data under this scope, i.e., the selected SS nodeID in response to a surrogate selection request. The SM may the use a suitable namespace to retrieve relevant information of server/network statistics, and server state etc.

The request/response messages may always be initiated by the TM whenever there is a new FQDN request, and may be exchanged in an event-driven manner between the SM and TM, e.g., after there is a pub/sub match found at the RV. The relevant information needed for surrogate selection may be configured based on one or more specific application requirements.

In one example, the information provided by the TM to SM may include the calculated distances for the surrogate servers that are controlled by the SM, which may be for instance encoded in a simple attribute/value or some XML-based format. This information may be calculated based on the position of the surrogate servers in the network graph database as stored in the TM, and may be shared between SM and TM. The network load (if available from the monitoring functions at the TM), that relates to any link the SSs are attached with, may be passed to SM for surrogate selection. It is noted that the TM may normally stay with the network operator and normally may not share the full network graph with the SM, which may normally stay with one or more third parties. Only the information relating to the SSs that are controlled by the SM may be shared.

In another example, the information provided by the SM to TM may include the selected SS nodeID as calculated at the SM based on predefined objective functions. It is noted that the status/information of the SS may be considered to be informed by the SA to the NAP and thereafter to the TM, and therefore this information may not be exchanged via the TM-SM interface.

FIG. 26 is a message sequence chart illustrating example messaging 2600 for surrogate selection. SM 2290 transmits a subscription Sub: SM-TM/FQDN/Request to RV 2250 in message 2602 and TM 2260 transmits a subscription SM-TM/FQDN/Response to RV 2250 in message 2604 to initiate communications via the SM-TM interface. After a new access request to a FQDN is issued from client 2206 to NAP 2216 in message 2606, the NAP 2216 may translate this message and publish a new FQDN request to RV 2250 in message 2608. If there is a subscriber SS available, RV 2250 may find a pub/sub match. After a pub/sub match occurs at RV 2250, RV 2250 may send publication with the path request to the TM 2260 in message 2610. Rather than determine the path topology based on shortest path rule, the TM may publish the path request for a surrogate nodeID so that the SM can receive a notification via the TM-SM interface in message 2612.

The SM may derive the best available SS for serving this request in action 2614, and may reply to TM 2260 via the TM-SM interface in message 2616 with the surrogate nodeID as a response based on standard pub/sub communication logic. The TM 2260 may then calculate the topology formation based on the selected SS nodeID in action 2618 and may send the calculated topology to NAP 2216 in message 2620 for content delivery in action 2622.

It is noted that the surrogate selection algorithm may be based on multi-criteria metrics, and can involve network statistics, server statistics/status and access constraints. Implementations of this algorithm can be defined based on performance-threshold-based decision making. More comprehensive algorithms can be defined by using the parameters defined in this document based on different requirements from applications.

FIGS. 27A and 27B are a message sequence chart illustrating example messaging 2700 for surrogate placement. In this example, SM 2290 may derive a temporary SS 2220 in action 2702 and supply the Surrogate node ID for the temporary SS 2220 to TM 2260 in message 2704 via the TM-SM interface based on standard pub/sub communications procedures.

The TM 2260 may then calculate the topology formation based on the selected SS nodeID in action 2706 and may send the calculated topology to NAP 2216 in message 2708 for content delivery in action 2710. Data can then be served from temporary SS 2220 to a client in messaging 2712.

In the course of selecting temporary SS 2220 in action 2702, SM 2290 may determine that SS 2324 is a better alternative surrogate which is however not yet available. SM 2290 and may transmit WAKE and CONNECT commands to SS 2324 via eNAP 2334 in messages 2714 and 2716, assuming the content is already placed. If the content is not yet placed into the alternative SS 2324, SM 2290 may initiate PLACE, WAKE, and CONNECT commands to this alternative SS 2324 to make the requested content available for serving.

After the content is placed and the surrogate server is connected in action 2718, SS 2324 may inform SM 2290 of its CONNECTED server state via eNAP 2334 in messages 2720 and 2722. After receiving message 2722, SM 2290 may inform RV 2250 that there is a new subscriber SS 2324 available in the network in message 2724, and RV 2216 can transmit this information to NAP 2216 in message 2726. As a result, NAP 2216 may then flush the local forwarding states in action 2728 (e.g., the Blackadder API states).

After a new access request to a FQDN is issued from client 2206 to NAP 2216 in message 2730, the NAP 2216 may translate this message and publish a new FQDN request to RV 2250 in message 2732. SS 2324 is now available, and RV 2250 may find a pub/sub match with SS 2324. After the pub/sub match occurs at RV 2250, RV 2250 may send a publication with the path request to the TM 2260 in message 2734. The TM 2260 may publish the path request for a surrogate nodeID so that SM 2290 receives a notification via the TM-SM interface in message 2736. It is noted that the TM-SM interface, and all communication discussed with respect to ICN portions of the network communicate using ICN pub/sub procedures. For example, while message 2736 is indicated by an arrow from TM to SM, it is understood that TM publishes the message, (e.g., to RV), and SM, which is subscribed to receive such messages, receives it via subscription and not necessarily directly from TM.

SM may determine that SS 2324 is now the best available SS for serving this request in action 2738, and may reply to TM 2260 via the TM-SM interface in message 2740 with the surrogate nodeID of SS 2324 as a response based on standard pub/sub communication logic. The TM 2260 may then calculate the topology formation based on the selected SS 2324 nodeID in action 2742 and may send the calculated topology to NAP 2216 in message 2746 for content delivery in action 2746. Data can then be served from new SS 2324 to a client in messaging 2748.

Although features and elements are described above in particular combinations, one of ordinary skill in the art will appreciate that each feature or element can be used alone or in any combination with the other features and elements.

In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method for server management in a communications network, comprising:

   receiving, by a surrogate manager server, SM (2290), from a topology manager, TM (2260), a request (2612) for a serving surrogate server, SS;
   determining (2614, 2702), by the SM, a best SS based on information available at the SM, the information including network statistics, server statistics, server status, network topology, network load, or access constraints;
   on a condition that the best SS is in a connected server state:

   transmitting, by the SM to the TM, a message (2616) indicating an identity of the best SS;
   on a condition that the best SS is not in a connected server state:

   determining (2702), by the SM, a best connected SS (2220) based on the information available at the SM;
   transmitting, by the SM to the TM, a message (2704) indicating an identity of the best connected SS;
   transmitting, by the SM, a management command (2714) to transition the best SS (2324) to the connected server state, and
   transmitting, by the SM to the TM, a message (2740) indicating the identity of the best SS.

2. The method of claim 1, wherein the request for an SS comprises a request for a serving surrogate server which is one of a plurality of surrogate servers.

3. The method of claim 1 or 2, wherein the request for an SS comprises a topology formation request from a rendezvous device, RV (2250).

4. The method of any one of the preceding claims, wherein the management command comprises a connect, wakeup, and/or disconnect command.

5. The method of any one of the preceding claims, wherein the TM is configured to form a communication path between a publisher and a subscriber.

6. The method of any one of the preceding claims, further comprising instantiating and placing (2714) the best SS in an information centric network, ICN.

7. A surrogate manager, SM, device (2290) for server management in a communications network, comprising:

   receiver circuitry (509) operable to receive, from a topology manager, TM (2206), a request (2612) for a serving surrogate server, SS;
   processing circuitry (506) operable to determine (2614, 2702) a best SS based on information available at the SM, the information including network statistics, server statistics, server status, network topology, network load, or access constraints;
   the processing circuitry configured to, on a condition that the best SS is in a connected server state:
   transmit to the TM a message (2616) indicating an identity of the best SS;
   the processing circuitry configured to, on a condition that the best SS is not in a connected server state:

   determine (2702) a best connected SS based on the information available at the SM;
   transmit, to the TM, a message (2704) indicating an identity of the best connected SS;

transmit a management command (2714) to transition the best SS (2324) to the connected server state, and transmit to the TM a message (2740) indicating the identity of the best SS.

8. The SM device of claim 7, wherein the request for an SS comprises a request for a serving surrogate server which is one of a plurality of surrogate servers.

9. The SM device of claim 7 or 8, wherein the request for an SS comprises a topology formation request from a rendezvous device, RV (2250).

10. The SM device of any one of claims 7-9, wherein the management command comprises a connect, wakeup, and/or disconnect command.

11. The SM device of any one of claims 7-10, wherein the TM is configured to form a communication path between a publisher and a subscriber.

12. The SM device of any one of claims 7-11, wherein the processing circuitry is further configured to instantiate and place the best SS in an information centric network, ICN.

13. The SM device of any one of claims 7-12, wherein the communications network comprises a content distribution network, a surrogate content distribution network, or an information-centric network, ICN.


**Patentansprüche**

1. Verfahren zur Serververwaltung in einem Kommunikationsnetzwerk, umfassend:

Empfangen, durch einen Ersatzverwalterserver (SM) (2290) von einem Topologieverwalter (TM) (2260), einer Anforderung (2612) für einen bedienenden Ersatzserver (SS);
Bestimmen (2614, 2702), durch den SM, eines besten SS basierend auf Informationen, die auf dem SM verfügbar sind, wobei die Informationen Netzwerkstatistiken, Serverstatistiken, Serverzustand, Netzwerktopologie, Netzwerklast oder Zugriffsbeschränkungen beinhalten;
unter der Bedingung, dass sich der beste SS in einem verbundenen Serverzustand befindet:

Übertragen, durch den SM an den TM, einer Nachricht (2616), die eine Identität des besten SS angibt;
unter der Bedingung, dass sich der beste SS nicht in einem verbundenen Serverzustand befindet:

Bestimmen (2702), durch den SM, eines besten verbundenen SS (2220) basierend auf den Informationen, die auf dem SM verfügbar sind;
Übertragen, durch den SM an den TM, einer Nachricht (2704), die eine Identität des besten verbundenen SS angibt;
Übermitteln, durch den SM, eines Verwaltungsbefehls (2714) zum Überführen des besten SS (2324) in den verbundenen Serverzustand, und
Übertragen, durch den SM an den TM, einer Nachricht (2740), die die Identität des besten SS angibt.

2. Verfahren nach Anspruch 1, wobei die Anforderung für einen SS eine Anforderung für einen bedienenden Ersatzserver, der einer von mehreren Ersatzservern ist, umfasst.

3. Verfahren nach Anspruch 1 oder 2, wobei die Anforderung für einen SS eine Topologiebildungsanforderung von einer Rendezvousvorrichtung (RV) (2250) umfasst.

4. Verfahren nach einem der vorhergehenden Ansprüche, wobei der Verwaltungsbefehl einen Verbindungs-, Aufwachund/oder Trennungsbefehl umfasst.

5. Verfahren nach einem der vorhergehenden Ansprüche, wobei der TM konfiguriert ist, einen Kommunikationsweg zwischen einem Herausgeber und einem Abonnenten zu bilden.

6. Verfahren nach einem der vorhergehenden Ansprüche, ferner umfassend Instanziieren und Platzieren (2714) des besten SS in einem informationszentrischen Netzwerk (ICN).

7. Ersatzverwalter(SM)-Vorrichtung (2290) zur Serververwaltung in einem Kommunikationsnetzwerk, umfassend:

eine Empfängerschaltung (509), die dazu dient, von einem Topologieverwalter (TM) (2206) eine Anforderung (2612) für einen bedienenden Ersatzserver (SS) zu empfangen;
eine Verarbeitungsschaltung (506), die dazu dient, einen besten SS basierend auf Informationen, die auf dem SM verfügbar sind, zu bestimmen (2614, 2702), wobei die Informationen Netzwerkstatistiken, Serverstatistiken, Serverzustand, Netzwerktopologie, Netzwerklast oder Zugriffsbeschränkungen beinhalten;
wobei die Verarbeitungsschaltung konfiguriert ist, unter der Bedingung,
dass sich der beste SS in einem verbundenen Serverzustand befindet:
eine Nachricht (2616) an den TM zu übertragen, die eine Identität des besten SS angibt;
wobei die Verarbeitungsschaltung konfiguriert ist, unter der Bedingung, dass sich der beste SS nicht in einem verbundenen Serverzustand befindet:

einen besten verbundenen SS basierend auf den Informationen, die auf dem SM verfügbar sind, zu bestimmen (2702);
eine Nachricht (2704) an den TM zu übertragen, die eine Identität des besten verbundenen SS angibt;
einen Verwaltungsbefehl (2714) zum Überführen des besten SS (2324) in den verbundenen Serverzustand zu übertragen, und eine Nachricht (2740) an den TM zu übertragen, die die Identität des besten SS angibt.

8. SM-Vorrichtung nach Anspruch 7, wobei die Anforderung für einen SS eine Anforderung für einen bedienenden Ersatzserver, der einer von mehreren Ersatzservern ist, umfasst.

9. SM-Vorrichtung nach Anspruch 7 oder 8, wobei die Anforderung für einen SS eine Topologiebildungsanforderung von einer Rendezvousvorrichtung (RV) (2250) umfasst.

10. SM-Vorrichtung nach einem der Ansprüche 7-9, wobei der Verwaltungsbefehl einen Verbindungs-, Aufwach- und/oder Trennungsbefehl umfasst.

11. SM-Vorrichtung nach einem der Ansprüche 7-10, wobei der TM konfiguriert ist, einen Kommunikationsweg zwischen einem Herausgeber und einem Abonnenten zu bilden.

12. SM-Vorrichtung nach einem der Ansprüche 7-11, wobei die Verarbeitungsschaltung ferner konfiguriert ist, den besten SS in einem informationszentrischen Netzwerk (ICN) zu instanziieren und zu platzieren.

13. SM-Vorrichtung nach einem der Ansprüche 7-12, wobei das Kommunikationsnetzwerk ein Inhaltsverteilungsnetzwerk, ein Ersatzinhaltsverteilungsnetzwerk oder ein informationszentrisches Netzwerk (ICN) umfasst.

**Revendications**

1. Procédé de gestion de serveur dans un réseau de communication, comprenant de :

recevoir, par un serveur de gestion de substitution, SM (2290), d'un gestionnaire de topologie, TM (2260), une demande (2612) pour un serveur de substitution de desserte, SS ;
déterminer (2614, 2702), par le SM, un meilleur SS sur la base des informations disponibles au SM, les informations comprenant les statistiques du réseau, les statistiques du serveur, l'état du serveur, la topologie du réseau, la charge du réseau ou les contraintes d'accès ;
à condition que le meilleur SS soit dans un état de serveur connecté :

transmettre, par le SM au TM, un message (2616) indiquant une identité du meilleur SS ;
à condition que le meilleur SS ne soit pas dans un état de serveur connecté :

déterminer (2702), par le SM, un SS (2220) le mieux connecté sur la base des informations disponibles au SM ;
transmettre, par le SM au TM, un message (2704) indiquant une identité du SS le mieux connecté ;
transmettre, par le SM, une commande de gestion (2714) pour faire passer le meilleur SS (2324) à l'état de serveur connecté, et
transmettre, par le SM au TM, un message (2740) indiquant l'identité du meilleur SS.

2. Procédé selon la revendication 1, dans lequel la demande de SS comprend une demande d'un serveur de substitution de desserte qui est un d'une pluralité de serveurs de substitution.

3. Procédé selon la revendication 1 ou 2, dans lequel la demande de SS comprend une demande de formation de topologie à partir d'un dispositif de rendez-vous, RV (2250).

4. Procédé selon une quelconque des revendications précédentes, dans lequel la commande de gestion comprend une commande de connexion, de réveil et/ou de déconnexion.

5. Procédé selon une quelconque des revendications précédentes, dans lequel la TM est configurée pour former un chemin de communication entre un éditeur et un abonné.

6. Procédé selon une quelconque des revendications précédentes, comprenant en outre l'instanciation et le placement (2714) des meilleurs SS dans un réseau centré sur l'information, ICN.

7. Dispositif de gestion de substitution, SM, (2290) pour la gestion de serveurs dans un réseau de communication, comprenant :

un circuit récepteur (509) opérationnel pour recevoir, à partir d'un gestionnaire de topologie, TM (2206), une demande (2612) d'un serveur de substitution serveur, SS ;
un circuit de traitement (506) opérationnel pour déterminer (2614, 2702) un meilleur SS sur la base des informations disponibles sur le SM, les informations comprenant les statistiques du réseau, les statistiques du serveur, l'état du serveur, la topologie du réseau, la charge du réseau ou les contraintes d'accès ;
le circuit de traitement étant configuré pour, à condition que le meilleur SS soit dans un état de serveur connecté :
transmettre au TM un message (2616) indiquant une identité des meilleurs SS ;
le circuit de traitement étant configuré pour, à condition que le meilleur SS ne soit pas dans un état de serveur connecté :

déterminer (2702) un SS le mieux connecté sur la base des informations disponibles au niveau du SM ;
transmettre, au TM, un message (2704) indiquant une identité du SS le mieux connecté ;
transmettre une commande de gestion (2714) pour faire la transition du meilleur SS (2324) à l'état du serveur connecté, et
transmettre au TM un message (2740) indiquant l'identité du meilleur SS.

8. Dispositif SM selon la revendication 7, dans lequel la demande de SS comprend une demande pour un serveur de substitution serveur qui est l'un d'une pluralité de serveurs de substitution.

9. Dispositif SM selon la revendication 7 ou 8, dans lequel la demande de SS comprend une demande de formation de topologie d'un dispositif de rendez-vous, RV (2250).

10. Dispositif SM selon une quelconque des revendications 7 à 9, dans lequel la commande de gestion comprend une commande de connexion, de réveil et / ou de déconnexion.

11. Dispositif SM selon une quelconque des revendications 7 à 10, dans lequel la TM est configurée pour former un chemin de communication entre un éditeur et un abonné.

12. Dispositif SM selon une quelconque des revendications 7 à 11, dans lequel le circuit de traitement est en outre configuré pour instancier et placer le meilleur SS dans un réseau centré sur l'information, ICN.

13. Dispositif SM selon une quelconque des revendications 7 à 12, dans lequel le réseau de communication comprend un réseau de distribution de contenu, un réseau de distribution de contenu de substitution ou un réseau centré sur l'information, ICN.

FIG. 1A

EP 3 430 787 B1

FIG. 1B

FIG. 1C

EP 3 430 787 B1

FIG. 1D

EP 3 430 787 B1

FIG. 1E

EP 3 430 787 B1

FIG. 2

EP 3 430 787 B1

FIG. 3

FIG. 4

EP 3 430 787 B1

EP 3 430 787 B1

550

**ICN**

**SURROGATE MANAGER** 505

506

**COORDINATOR**

507

**STATICS DATABASE**

SERVER LOAD
NETWORK LOAD
LATENCY/RTT
LOCALITY
CONTENT DISTRIBUTION

COMMANDS

508

**SENDER**

509

**RECEIVER**

540

**IP**

525 526

SS1 SS2 · · · ·

527 528

SS1 SS2 · · · ·

520 521

VMM1 VMM2 · · · ·

522 523

VMM1 VMM2 · · · ·

NAP SA

530 eNAP 515

535

NAP SA · · · ·

531 eNAP 516

536

**BLACKADDER PUB/SUB API**

510

SERVER STATICS

MANAGEMENT COMMANDS
/root/location/nodeID/FQDN/link-local/state

FIG. 5

EP 3 430 787 B1

FIG. 6

FIG. 7

FIG. 8

702 SR
704 SM
706 SA
708 RV
710 VMM
800

812 FQDN de-reg

PUB:/S/L/FR/LL/MC:DISCONNECT 712

GET PUBLISHED DATE: DISCONNECT 816

818 NOTIFICATION

DISCONNECT 820

822 WAKED

PUB:/S/L/FR/LL/MC:SHUTDOWN 824

823 WAKED

GET PUBLISHED DATA: SHUTDOWN 826

828 NOTIFICATION

SHUTDOWN 830

PUB:/S/L/FR/LL/MC:DISPLACE 834

823 PLACED

PLACED 832

GET PUBLISHED DATE: DISPLACE 816

838 NOTIFICATION

839 NOTIFICATION

DISPLACE 840

NONPLACED

823 NONPLACED

842

SURROGATE DEREGISTRATION

FIG. 9

EP 3 430 787 B1

FIG. 10

FIG. 11

SURROGATE PLACEMENT

702 SR
704 SM
706 SA
708 RV
710 VMM

1100

1102 FQDN REQUEST WITH REQUIREMENTS

SSELECT
1104

PUB:/S/L/FR/LL/MC:PLACE 1106

GET PUBLISHED DATE: PLACE 1108

PLACE 1110

VMM/SSELECT
1112

SITE MIGRATION 1114

1116 PLACED

1118 PLACED

EP 3 430 787 B1

46

FIG. 12

SURROGATE ACTIVATION

EP 3 430 787 B1

47

FIG. 13

FIG. 14

EP 3 430 787 B1

FIG. 15

SR 702  SM 704  SA 706  RV 708  1500  VMM 710

UNAVAILABILITY DETECTION

1504

REPORT

1505

1502

PUB/S/L/N/F/LL/ ManagementCommands: WAKEUP

1506

GET PUBLISHED DATA

1508

SELECT NEW SS

1510

PUB/S/L/N/F/LL/ActivationCommands:BOOT

1511

GET PUBLISHED DATA

1522

WAKEUP

1518  1516

RESPONSE  RESPONSE

WOKEN

1514

1510

PUB/S/L/N/F/LL/ActivationCommands:CONNECT

1511

GET PUBLISHED DATA

1522

CONNECT

1528  1526

RESPONSE  RESPONSE

CONNECT

1524

RESILIENCE CONTROL

EP 3 430 787 B1

50

1600

NEW FQDN REQUEST {req_locality, max_latency, req_storage} — 1602

SERVER STATE {placed/connected/booted/ non-booted/non-placed} — 1618

SERVER STATE = NON-PLACED? — 1604

NO → NOT SELECTED

YES

VMM STATISTICS {cache/memory/processing/ serviceload} — 1620

{cache/memory}>{req_storge} — 1606

NO → NOT SELECTED

YES

NETWORK STATISTICS {latency/bandwidth_fr/ bandwidth_ba} — 1622

CALCULATE {latency (locality) BASED ON {req_locality} — 1608

{latency (locality)}<{max_latency} — 1610

NO → NOT SELECTED

YES

SELECT THE SS AGAINST COST FUNCTION FROM ALL QUALIFIED SS's — 1612

SURROGATE ACTIVATION — 1616

SURROGATE PLACEMENT — 1624

FIG. 16

FIG. 17

RESOURCE PRICE:
STORAGE
PROCESSING
DELAY
BANDWIDTH

ACCESS DEMAND:
NUMBER OF REQUEST
TARGET LATENCY
TARGET DATA RATE
LENGTH OF ACCESS

ICN REGIONAL CLOUD

ORIGIN SERVER

UNDER-PERFORM

OVERLOADED

EP 3 430 787 B1

FIG. 18

FIG. 19

EP 3 430 787 B1

FIG. 20

EP 3 430 787 B1

FIG. 21

EP 3 430 787 B1

FIG. 22

EP 3 430 787 B1

FIG. 23

FIG. 24

EP 3 430 787 B1

2500

2510 /SM-TM

2520 /FQDN

2530 /message

2540 REQUEST
2560 NodeID

2550 RESPONSE
2570 NodeID

FIG. 25

FIG. 26

EP 3 430 787 B1

CONTINUED ON FIG. 27B

FIG. 27A

NEW SURROGATE PLACEMENT

EP 3 430 787 B1

FIG. 27B

EP 3 430 787 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014192717 A